# EUROPEAN PATENT APPLICATION

(11) **EP 4 737 358 A1**
(43) Date of publication of application: **06.05.2026**
(21) Application number: 24830101.2
(22) Date of filing: 19.04.2024
(51) Int. Cl.: B65G 1/04, B65G 1/137

(54) **CONTAINER RETRIEVAL AND PLACEMENT SYSTEM AND METHOD, A CONTAINER TRANSPORT DEVICE, AND CONTAINER RETRIEVAL AND PLACEMENT APPARATUS**

(30) Priority: 30.06.2023 CN 202310801610; 30.06.2023 CN 202321713003 U
(71) Applicant: Hangzhou Hikrobot Co., Ltd., Hangzhou, Zhejiang 310051 (CN)
(72) Inventor: QIAO, Zhi, Hangzhou, Zhejiang 310051 (CN); WU, Chao, Hangzhou, Zhejiang 310051 (CN); WANG, Zheng, Hangzhou, Zhejiang 310051 (CN)
(74) Representative: Epping - Hermann - Fischer
(86) International application number: PCT/CN2024/088894
(87) International publication number: WO 2025/001452

(57) **Abstract**

The embodiments of the present application provides a workbin picking up and placing system and method, a workbin transporting device, and a workbin picking up and placing apparatus. The system includes a workbin transporting device and a control platform; the workbin transporting device includes a controller, a travelling chassis, a workbin temporary storage mechanism and a workbin picking up and placing apparatus; the controller of the workbin transporting device is communicatively connected with the control platform; the controller is electrically connected with the travelling chassis, the telescopic fork assembly and the shift fork pair assembly; the controller is configured for receiving a picking up instruction or a placing instruction sent by the control platform, and controlling the movement of the travelling chassis and the working states of the telescopic fork assembly and the shift fork pair assembly based on the picking up instruction or the placing instruction, wherein the shift fork pair assembly includes a rear shift fork pair, a middle shift fork pair and a front shift fork pair which are sequentially provided, and at least the middle shift fork pair and the front shift fork pair are movably connected with the outer fork plate, so that the controller can separately control the working states of the middle shift fork pair and the front shift fork pair, thereby expanding the scope of application of the workbin picking up and placing system.

## Description

The present application claims the priorities to Chinese Patent Application No. 202310801610.0 filed with the China National Intellectual Property Administration on June 30, 2023 and entitled "WORKBIN PICKING UP AND PLACING SYSTEM AND METHOD, WORKBIN TRANSPORTING DEVICE AND WORKBIN PICKING UP AND PLACING APPARATUS", and Chinese Patent Application No. 202321713003.0 filed with the China National Intellectual Property Administration on June 30, 2023 and entitled "WORKBIN TRANSPORTING DEVICE AND WORKBIN PICKING UP AND PLACING APPARATUS", which are incorporated herein by reference in their entirety.

### Technical Field

The present application relates to the technical field of warehouse logistics, in particular to a workbin picking up and placing system and method, a workbin transporting device and a workbin picking up and placing apparatus.

### Background

At present, in the warehouse logistics technology, a workbin transporting device is generally used to automatically place a workbin on a shelf, or pick up the workbin from the shelf and transport the workbin to other locations. The workbin transporting device is usually an automated guided vehicle, which is provided with a workbin picking up and placing apparatus. The workbin picking up and placing apparatus can place a workbin on the storage space of the vehicle body on a shelf or pick up the workbin from the shelf and place the workbin on the storage space of the vehicle body.

The common type of the workbin picking up and placing apparatus generally includes two shift fork pairs, namely a front shift fork pair and a rear shift fork pair. The rear shift fork pair can push a workbin on the storage space of the vehicle body into a shelf or push a workbin picked up from a shelf into the storage space of the vehicle body. The front shift fork pair is generally arranged to be able to swing up and down, and cooperates with the rear shift fork pair to prevent the workbin from deviating during the movement. Generally, the workbin picking up and placing is only for fixed models of workbins, which leads to a limited scope of application of the workbin picking up and placing apparatus.

### Summary

The embodiments of the present application aim to provide a workbin picking up and placing system and method, a workbin transporting device and a workbin picking up and placing apparatus, to expand the scope of application of the workbin picking up and placing system. The specific technical solutions are as follows.

In a first aspect of the embodiments of the present application, it is provided a workbin picking up and placing system, including: a workbin transporting device and a control platform; wherein the workbin transporting device includes a controller, a travelling chassis, a workbin temporary storage mechanism and a workbin picking up and placing apparatus; the controller of the workbin transporting device is communicatively connected with the control platform; the workbin picking up and placing apparatus includes a bearing part, a telescopic fork assembly and a shift fork pair assembly; the telescopic fork assembly is provided at both sides of the bearing part; the shift fork pair assembly is provided on an outer fork plate of the telescopic fork assembly and includes a rear shift fork pair, a middle shift fork pair and a front shift fork pair which are sequentially provided, and at least the middle shift fork pair and the front shift fork pair are movably connected with the outer fork plate; the controller is electrically connected with the travelling chassis, the telescopic fork assembly and the shift fork pair assembly; the controller is configured for receiving a picking up instruction or a placing instruction sent by the control platform, and controlling the traveling chassis to move based on the picking up instruction or the placing instruction, to enable the workbin transporting device to move to a picking up target shelf or a placing target shelf; determining a target moving out position to which the outer fork plate moves out in a direction of the shelf or in a direction of the workbin temporary storage mechanism and determining at least two target shift fork pairs among the three shift fork pairs, based on a size information of a target workbin and a position information and an angle information of the target workbin on the picking up shelf or the placing target shelf; controlling, after the outer fork plate is moved out to the target moving out position, the target shift fork pairs to rotate, to enable the telescopic fork assembly to clamp and pick up the target workbin; moving the target workbin from the picking up target shelf to the bearing part of the workbin picking up and placing apparatus and moving the target workbin to the workbin temporary storage mechanism, or moving the target workbin from the workbin temporary storage mechanism to the bearing part of the workbin picking up and placing apparatus and moving the target workbin to the target placing shelf.

In some embodiments, the workbin transporting device further includes a gantry; the workbin temporary storage mechanism is provided at a first side of the gantry; the workbin picking up and placing device is provided at a second side of the gantry; the rear shift fork pair, the middle shift fork pair and the front shift fork pair are sequentially provided along a first direction away from the gantry.

In some embodiments, the telescopic fork assembly includes telescopic forks which are provided oppositely on both sides of the bearing part and transmission mechanisms which are provided oppositely on both sides of the bearing part, and each of the telescopic forks includes an inner fixed plate connected with the gantry and at least one-stage fork plate slidably connected with the inner fixed plate, and the transmission mechanisms are configured for driving the at least one-stage fork plate to perform a reciprocating telescopic movement; wherein a fork plate which can be telescoped farthest from the gantry is the outer fork plate; the controller controls the fork plate of the telescopic fork to telescope in two directions along the horizontal direction through the transmission mechanisms, to perform the reciprocating telescopic movement.

In some embodiments, a plurality of through holes are provided on the outer fork plate, at least the middle shift fork pair is accommodated in the through holes, and the controller controls the shift fork pair to move out from one of the through holes; a clamping distance between the rear shift fork pair and the front shift fork pair, between the rear shift fork pair and the middle shift fork pair, or between the middle shift fork pair and the front shift fork pair is changed by changing a position of the through hole where the shift fork pair is located when moving out.

In some embodiment, at least one of the rear shift fork pair, the middle shift fork pair and the front shift fork pair is movably connected with the outer fork plate through an electric telescopic rod; the controller is further electrically connected with the electric telescopic rod to control telescoping of the electric telescopic rod, to change the clamping distance between the rear shift fork pair and the middle shift fork pair, between the rear shift fork pair and the front shift fork pair or between the middle shift fork pair and the front shift fork pair is changed.

In some embodiments, or at least two shift fork pairs among the shift fork pairs, at least two groups of each of the least two shift fork pairs are provided at intervals along a height direction of the outer fork plate; the controller separately controls each group of the two shift fork pairs.

In some embodiments, a front end of the workbin picking up and placing apparatus is also provided with a code reading camera; the controller obtains the size information of the target workbin and positioning information of the picking up target shelf or the placing target shelf from the picking up instruction or the placing instruction; and obtains the position information and the angle information of the target workbin on the picking up shelf or the placing target shelf by the code reading camera scanning an information code of the picking up target shelf or the placing target shelf.

In some embodiments, the bearing part (41) is one of an unpowered guide plate, a powered belt assembly or a roller assembly.

In some embodiments, the bearing part is the powered belt assembly or the roller assembly, and the controller is further electrically connected with a power assembly of the belt assembly or the roller assembly to control the belt assembly or the roller assembly to drive the target workbin thereon to move.

In a second aspect, the present application provides a workbin picking up and placing method, which is applied to the controller of the above workbin picking up and placing system, including:
receiving the picking up instruction or the placing instruction sent by the control platform;
controlling the traveling chassis to move based on the picking up instruction or the placing instruction, to enable the workbin transporting device to move to the picking up target shelf or the placing target shelf;
based on the size information of the target workbin and the position information and the angle information of the target workbin on the picking up shelf or the placing target shelf, determining the target moving out position to which the outer fork plate moves out in the direction of the shelf or in the direction of the workbin temporary storage mechanism and determining the at least two target shift fork pairs among the three shift fork pairs;
after the outer fork plate is moved out to the target moving out position, controlling the target shift fork pairs to rotate, to enable the telescopic fork assembly to clamp and pick up the target workbin;
moving the target workbin from the picking up target shelf to the bearing part of the workbin picking up and placing apparatus and moving the target workbin to the workbin temporary storage mechanism; or moving the target workbin from the workbin temporary storage mechanism to the bearing part of the workbin picking up and placing apparatus and moving the target workbin to the target placing shelf.

In some embodiment, at least one of the rear shift fork pair, the middle shift fork pair and the front shift fork pair is movably connected with the outer fork plate through an electric telescopic rod; the controller is further electrically connected with the electric telescopic rod; before controlling, after the outer fork plate is moved out to the target moving out position, the target shift fork pairs to rotate to enable the telescopic fork assembly to clamp and pick up the target workbin, the method further includes: controlling the electric telescopic rod based on the size information of the target workbin, so that the clamping distance between the rear shift fork pair and the front shift fork pair, between the rear shift fork pair and the front shift fork pair or between the middle shift fork pair and the front shift fork pair matches with a size of the target workbin.

In some embodiments, if the target workbin is two workbins horizontally placed on the picking up target shelf or the workbin temporary storage mechanism in a front-rear direction, the target shift fork pairs include the rear shift fork pair, the middle shift fork pair and the front shift fork pair; wherein controlling, after the outer fork plate is moved out to the target moving out position, the target shift fork pairs to rotate to enable the telescopic fork assembly to clamp and pick up the target workbin includes: after the outer fork plate is moved out to the target moving out position, locating the middle shift fork pair between the two workbins, and controlling each target shift fork pair to rotate to enable the telescopic fork assembly to clamp and pick up the target workbin; if the target workbin is a workbin with a first size matching with a size of the bearing part, the target shift fork pairs include the rear shift fork pair and the front shift fork pair; controlling, after the outer fork plate is moved out to the target moving out position, the target shift fork pairs to rotate to enable the telescopic fork assembly to clamp and pick up the target workbin includes: after the outer fork plate is moved out to the target moving out position, controlling each target shift fork pair to rotate, to enable the telescopic fork assembly to clamp and pick up the target workbin; if the target workbin is a workbin with a second size smaller than the size of the bearing part, it is determined, based on a target position of the target workbin on the workbin temporary storage mechanism, that the target shift fork pairs include the rear shift fork pair and the middle shift fork pair, or include the middle shift fork pair and the front shift fork pair; controlling the target shift fork pairs to rotate after the outer fork plate is moved out to the target moving out position, to enable the telescopic fork assembly to clamp and pick up the target workbin includes: after the outer fork plate is moved out to the target moving out position, controlling each target shift fork pair to rotate, to enable the telescopic fork assembly to clamp and pick up the target workbin.

In some embodiments, for at least two shift fork pairs among the shift fork pairs, at least two groups of each of the at least two shift fork pairs are provided at intervals along the height direction of the outer fork plate; if at least two groups of the front shift fork pair and at least two groups of the rear shift fork pair are provided at intervals along the height direction of the outer fork plate, two workbins placed up and down on the picking up target shelf can be clamped, and the workbins are workbins with a first size matching with a size of the bearing part; if at least two groups of the front shift fork pair and at least two groups of the middle shift fork pair are provided or at least two groups of the rear shift fork pair and at least two groups of the middle shift fork pair are provided at intervals along the height direction of the outer fork plate, two workbins placed up and down on the picking up target shelf can be clamped, and the workbins are workbins with a second size smaller than a size of the bearing part.

In some embodiments, an front end of the workbin picking up and placing apparatus is further provided with a code reading camera; the controller obtains the size information of the target workbin and positioning information of the picking up target shelf or the placing target shelf from the picking up instruction or the placing instruction; and obtains the position information and the angle information of the target workbin on the picking up shelf or the placing target shelf by the code reading camera scanning an information code of the picking up target shelf or the placing target shelf.

In some embodiments, the bearing part is a powered belt assembly or a roller assembly, and the controller is further electrically connected with a power assembly of the belt assembly or the roller assembly to control the belt assembly or the roller assembly to drive the target workbin thereon to move.

In a third aspect, the present application provides a workbin transporting device, including: a travelling chassis; a gantry provided on the travelling chassis, and a workbin temporary storage mechanism provided on a first side of the gantry; a workbin picking up and placing apparatus provided on a second side of the gantry, wherein the workbin picking up and placing apparatus is configured for clamping a workbin from outside and placing the workbin into the workbin temporary storage mechanism or placing the workbin in the workbin temporary storage mechanism on the outside; the workbin picking up and placing apparatus includes a bearing part, a telescopic fork assembly and a shift fork pair assembly; wherein, the bearing part is connected with the gantry for bearing a workbin; the telescopic fork assembly includes telescopic forks which are provided oppositely on both sides of the bearing part and transmission mechanisms which are provided oppositely on both sides of the bearing part, wherein each of the telescopic fork includes an inner fixed plate connected with the gantry and at least one-stage fork plate slidably connected with the inner fixed plate, and the transmission mechanisms are configured for driving the at least one-stage fork plate to perform a reciprocating telescopic movement; the shift fork pair assembly is provided on an outer fork plate farthest from the inner fixed plate when the telescopic fork is moved out, and the shift fork pair assembly at least includes a rear shift fork pair, a middle shift fork pair and a front shift fork pair which are sequentially provided on the outer fork plate along a first direction away from the gantry; at least the middle shift fork pair and the front shift fork pair are movably connected with the outer fork plate, and the middle shift fork pair and the front shift fork pair can switch between a first position parallel to the outer fork plate and a second position perpendicular to the outer fork plate.

In some embodiments, a plurality of temporary storage mechanisms are provided at intervals along a height direction of the gantry assembly; the workbin transporting device further includes a lifting and descending assembly which is slidably connected with the gantry, and the inner fixed plate and the bearing part are connected with the gantry through the lifting and descending assembly, to enable the lifting and descending assembly to drive the workbin picking up and placing apparatus to move along the height direction of the gantry, so as to adapt to heights of the temporary storage mechanisms at different heights.

In some embodiments, a plurality of through holes are provided on the outer fork plate, and at least the middle shift fork pair is accommodated in the through holes, wherein each of the through hole corresponds to an installation position; the installation position of one or two of the rear shift fork pair, the middle shift fork pair and the front shift fork pair are changed to change a clamping distance between the rear shift fork pair and the front shift fork pair, between the rear shift fork pair and the middle shift fork pair, or between the middle shift fork pair and the front shift fork pair.

In some embodiments, the front shift fork pair is located at an end of the outer fork plate on a side away from the gantry, the rear shift fork pair is located at an end of the outer fork plate on a side close to the gantry, and the through holes are configured to accommodate the middle shift fork pair; the installation position of the middle shift fork pair is changed to change the clamping distance between the rear shift fork pair and the middle shift fork pair, and the clamping distance between the middle shift fork pair and the front shift fork pair.

In some embodiment, at least one of the rear shift fork pair, the middle shift fork pair and the front shift fork pair is movably connected with the outer fork plate through a telescopic rod to change the clamping distance between the rear shift fork pair and the front shift fork pair, between the rear shift fork pair and the middle shift fork pair, or between the middle shift fork pair and the front shift fork pair.

In some embodiments, for at least two shift fork pairs among the shift fork pairs, at least two groups of each of the at least two shift fork pairs are provided at intervals along a height direction of the outer fork plate.

In some embodiments, the rear shift fork pair is movably or fixedly connected with the outer fork plate.

In some embodiments, the workbin transporting device further includes a controller, wherein the controller is electrically connected with the travelling chassis, the transmission mechanisms of the telescopic fork assembly and the shift fork pair assembly.

In some embodiments, the transmission mechanisms can telescope in two directions along a horizontal direction, to enable the outer fork plate to pick up and place the workbin on both sides of the gantry.

In some embodiments, a bottom of the bearing part is provided with a rotate supporting assembly, and the bearing part is rotatably mounted to the lifting and descending assembly through the rotate supporting assembly.

In some embodiments, the temporary storage mechanism has a tray structure; the workbin picking up and placing apparatus further includes a pair of support columns provided on the travelling chassis and spaced from the gantry, and the temporary storage mechanism is fixed on the gantry and the support columns and extends in a direction away from the support columns.

In some embodiments, the bearing part is one of an unpowered guide plate, a powered belt assembly or a roller assembly.

In a fourth aspect, the present application provides a workbin picking up and placing apparatus which is applied to the above workbin transporting device, wherein, the workbin picking up and placing apparatus includes the bearing part, the telescopic fork assembly and the shift fork pair assembly; wherein, the bearing part is connected with the gantry for bearing a workbin; the telescopic fork assembly includes telescopic forks which are provided oppositely on both sides of the bearing part and transmission mechanisms which are provided oppositely on both sides of the bearing part, wherein each of the telescopic forks includes the inner fixed plate connected with the gantry and the at least one-stage fork plate slidably connected with the inner fixed plate, and the transmission mechanisms are configured for driving the at least one-stage fork plate to perform the reciprocating telescopic movement; the shift fork pair assembly is provided on a one-stage outer fork plate away from the inner fixed plate when the telescopic fork is moved out, and the shift fork pair assembly at least includes the rear shift fork pair, the middle shift fork pair and the front shift fork pair which are sequentially provided on the outer fork plate along the first direction away from the gantry; at least the middle shift fork pair and the front shift fork pair are movably connected with the outer fork plate, to enable the middle shift fork pair and the front shift fork pair to switch between the first position parallel to the outer fork plate and the second position perpendicular to the outer fork plate.

Beneficial effects brought by embodiments of the present application:
In the workbin picking up and placing system provided by the embodiments of the present application, the controller can control the direction and distance at which the travelling chassis travels on the ground according to the instruction of the control platform, to enable the workbin transporting device to reach the target shelf to pick up or place the goods. According to the obtained size information of the target workbin and the information about position relationship between the workbin transporting device and the target workbin, the workbin transporting device adjusts the posture of the workbin picking up and placing apparatus, that is, adjusts and controls the rotation angle and moving out length of the middle shift fork and/or the front shift fork, and puts down the fork at the corresponding position, and then the telescopic forks clamp the target workbin, thereby enabling to match with the workbins of various sizes. Since at least the middle shift fork pair and the front shift fork pair are movably connected with the outer fork plate, the controller can separately control the working states of the middle shift fork pair and the front shift fork pair, which is suitable for various good picking up or placing scenes, and expanding the scope of application of the workbin picking and placing system.

Of course, it is not necessary for any product or method implementing the present application to achieve all the advantages described above simultaneously.

### Brief Description of the Drawings

The accompanying drawings described herein are intended to provide a further understanding of the present application and constitute a part of the present application. The schematic embodiments of the present application and their descriptions are used to explain the present application and do not constitute improper limitations of the present application.
FIG. 1 is a simplified schematic structure diagram of a workbin picking up and placing system provided by an embodiment of the present application;
FIG. 2 is a schematic diagram of an electrical connection for a workbin picking up and placing system provided by an embodiment of the present application;
FIG. 3 is a schematic structure diagram of a workbin transporting device provided by embodiments of the present application in an embodiment;
FIG. 4a is a simplified structure diagram of the workbin transporting device shown in FIG. 3 without a traveling wheel;
FIG. 4b is an enlarged schematic structure diagram of part A in FIG. 4a;
FIG. 5 is a schematic structure diagram of a workbin picking up and placing apparatus in FIG. 4a;
FIG. 6a is another schematic structure diagram of a workbin picking up and placing apparatus in the embodiment shown in FIG. 3;
FIG. 6b is a front view of a telescopic fork in the workbin picking up and placing apparatus shown in FIG. 6a;
FIG. 6c is a rear view of the telescopic fork shown in FIG. 6b;
FIG. 7 is a top view in which a workbin picking up and placing apparatus picks up a large workbin and a small workbin from a shelf;
FIG. 8a is a schematic perspective structure diagram in which a workbin picking up and placing apparatus picks up two small workbins with the same size from a shelf;
FIG. 8b is a top view of the shift fork in the embodiment shown in FIG. 8a before adjustment;
FIG. 8c is a top view of the shift fork in the embodiment shown in FIG. 8a after adjustment;
FIG. 9 is a top view in which a middle shift fork pair and a front shift fork pair of the workbin picking up and placing apparatus work simultaneously to place a small workbin into a workbin temporary storage mechanism;
FIG. 10 is a schematic structure diagram in which a rear shift fork pair and a front shift fork pair of the workbin picking up and placing apparatus work simultaneously to pick up a large workbin from a shelf;
FIG. 11a is a schematic perspective diagram in which the workbin transporting device picks up a workbin with a high-size and a workbin with a short-size from a shelf, wherein two groups of the middle shift fork pair and two groups of the front shift fork pair are provided;
FIG. 11b is a rear side view of FIG. 11a, wherein two groups of the middle shift fork pair and two groups of the front shift fork pair are provided;
FIG. 11c is a sectional view of FIG. 11a, wherein two groups of the middle shift fork pair and two groups of the front shift fork pair are provided;
FIG. 11d is a schematic structure view in which two groups of the rear shift fork pair and two groups of the middle shift fork pair are provided;
FIG. 12 is a schematic structure view in which only one group of the same shift fork pair is provided in the same scene as that in FIG. 11a;
FIG. 13 is a top view in which a large workbin is picked up from a shelf when the rear shift fork pair is a fixed shift fork pair;
FIG. 14 is a simplified structure diagram of a workbin transporting device provided by embodiments of the present application in another embodiment;
FIG. 15 is a simplified structure diagram of a workbin transporting device provided by embodiments of the present application in yet another embodiment;
FIG. 16 is a schematic flow chart of a workbin picking up and placing method provided by an embodiment of the present application;
FIG. 17 is another schematic flow chart of a workbin picking up and placing method provided by an embodiment of the present application.

Workbin transporting device 1; travelling chassis 10; gantry 20; workbin temporary storage mechanism 30; workbin picking up and placing apparatus 40; bearing part 41; telescopic fork assembly 42; telescopic fork 421; inner fixed plate 4211; first-stage fork plate 4212; mounting hole 4212a; second-stage fork plate 4213; through hole 4213a; transmission mechanism 422; first-stage dragging system 4221; synchronous wheel 4221a; synchronous belt 4221b; transmission member 4221c; second-stage dragging system 4222; belt 4222a; first fixed block 4222b; second fixed block 4222c; pulley 4222d; shift fork pair assembly 43; rear shift fork pair 431; middle shift fork pair 432; front shift fork pair 433; rotate supporting assembly 44; L-shaped angle iron 45; rotating shaft 46; first section 461; support column 50; lifting and descending assembly 60; lifting plate 61; chain 62; chain wheel 63; control platform 70; controller 80; first direction L; height direction H.

### Detailed Description

In order to make the objects, technical solutions and advantages of the present application more clearly, the present application will be further described in detail below with reference to the accompanying drawings and embodiments. Obviously, the embodiments described are only some of, but not all of, the embodiments of the present application. All other embodiments obtained by those skilled in the art based on the embodiments of the present application fall within the scope of the present application.

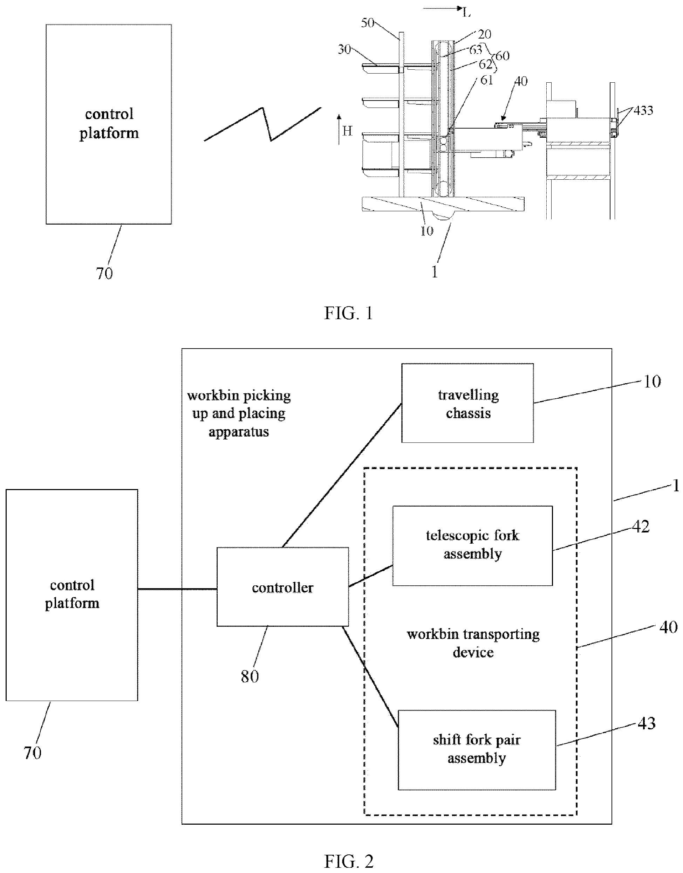

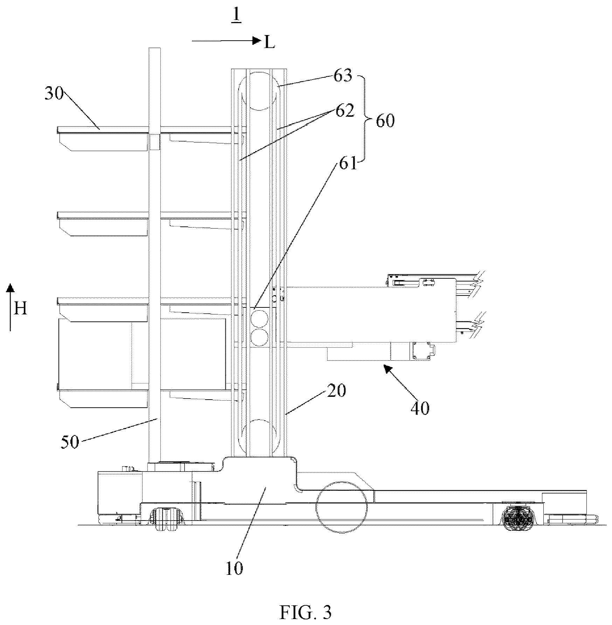

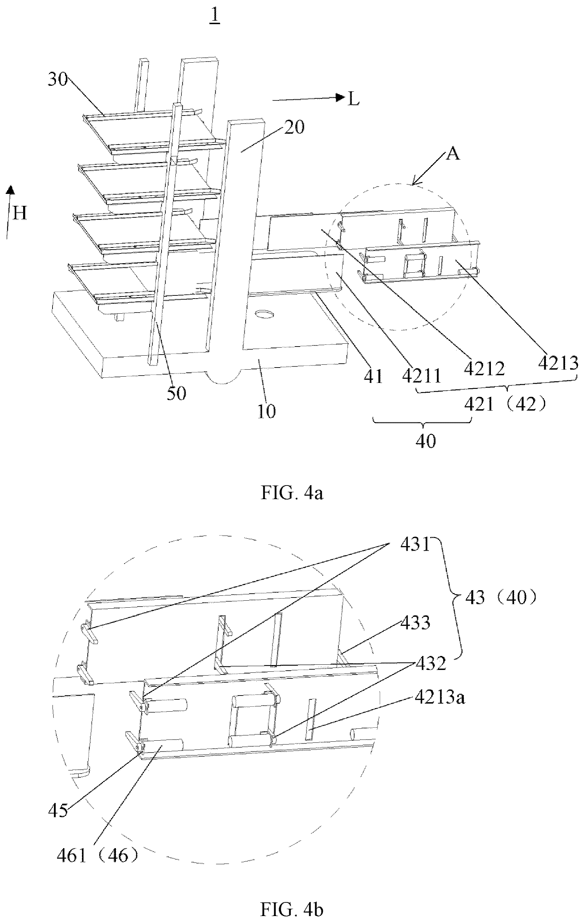

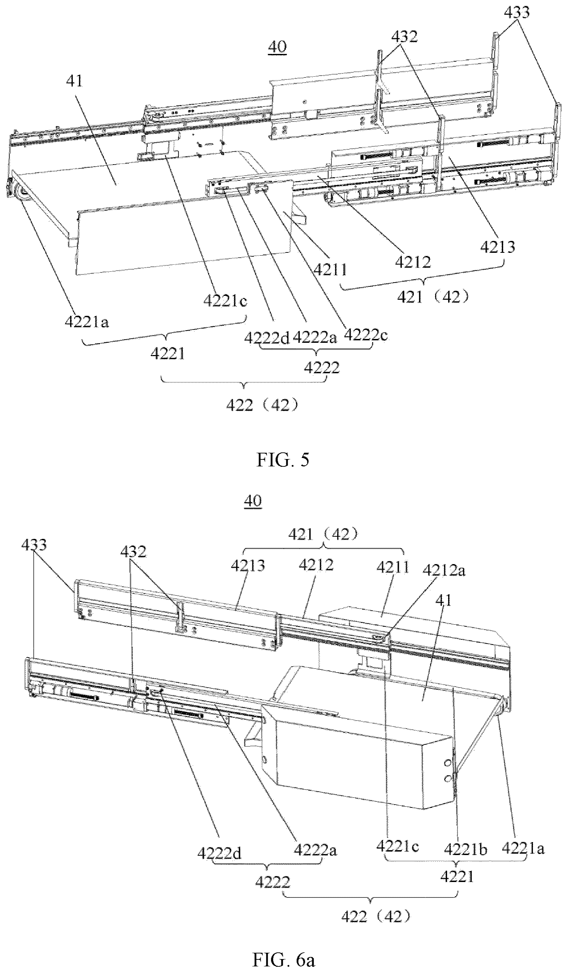

The present application provides a workbin picking up and placing system, referring to FIGs. 1 and 2, which includes a workbin transporting device 1 and a control platform 70. Referring to FIG. 3, FIG. 4a, FIG. 4b and FIG. 5, FIG. 4a is a simplified structure diagram of the workbin transporting device 1 shown in FIG. 3 without a traveling wheel; FIG. 4b is an enlarged schematic structure diagram of part A in FIG. 4a; FIG. 5 is a schematic structure diagram of a workbin picking up and placing apparatus 40 in FIG. 4a. As shown in FIG. 3, FIG. 4a, FIG. 4b and FIG. 5, the workbin transporting device 1 includes a controller 80, a traveling chassis 10, a workbin temporary storage mechanism 30 and a workbin picking up and placing apparatus 40, wherein the controller 80 of the workbin transporting device 1 is communicatively connected with the control platform 70; the workbin picking up and placing apparatus 40 includes a bearing part 41, a telescopic fork assembly 42 and a shift fork pair assembly 43; the telescopic fork assembly 42 is provided on both sides of the bearing part 41; the shift fork pair assembly 43 is provided on an outer fork plate of the telescopic fork assembly 42 and includes a rear shift fork pair 431, a middle shift fork pair 432 and a front shift fork pair 433 provided sequentially, and at least the middle shift fork pair 432 and the front shift fork pair 433 are movably connected with the outer fork plate; the controller 80 is electrically connected with the travelling chassis 10, the telescopic fork assembly 42 and the shift fork pair assembly 43. The controller 80 is configured for: receiving the picking up instruction or placing instruction sent by the control platform 70, and controlling the traveling chassis 10 to move based on the picking up instruction or placing instruction, so as to move the workbin transporting device 1 to a picking up target shelf or placing target shelf; based on a size information of a target workbin, a position information and an angle information of the target workbin on the picking up shelf or the placing target shelf, determining a target extension position to which the outer fork plate extends in the direction of the shelf or the workbin temporary storage mechanism 30 and determining at least two target shift fork pairs among the three shift fork pairs; controlling, after the outer fork plate is extended to the target extension position, the target shift fork pairs to rotate to enable the telescopic fork assembly 42 to clamp and pick up the target workbin, moving the target workbin from the picking up target shelf to the bearing part 41 of the workbin picking up and placing apparatus 40 and moving the target workbin to the workbin temporary storage mechanism 30, or moving the target workbin from the workbin temporary storage mechanism 30 to the bearing part 41 of the workbin picking up and placing apparatus 40 and moving the target workbin to the target placing shelf.

In an embodiment of the present application, the controller 80 can control the direction and distance at which the travelling chassis 10 travels on the ground according to the instruction from the control platform 70, so that the workbin transporting device 1 can reach the target shelf for picking up or placing goods. The workbin picking up and placing apparatus 40 includes the bearing part 41, the telescopic fork assembly 42 and the shift fork pair assembly 43. The telescopic fork assembly 42 includes transmission mechanisms 422 and telescopic forks 421. Two transmission mechanisms 422 and two telescopic forks 421 are provided, and the two transmission mechanisms 422 are arranged oppositely on both sides of the bearing part 41 and the two telescopic forks 421 are arranged oppositely on both sides of the bearing part 41. The telescopic forks 421 can be a telescopic fork 421 with one-stage telescoping function or a telescopic fork 421 with two or more-stage telescoping function. Taking the telescopic forks 421 with two-stage telescoping function as an example, the transmission mechanisms 422 are configured for controlling a reciprocating telescopic movement of the first-stage fork plate 4212 and the second-stage fork plate 4213, so that the first-stage fork plate 4212 and the second-stage fork plate 4213 can reach the picking up and placing station of the shelf when moving out, and can be within the range of the workbin transporting device 1 itself when retracting, thereby enabling the workbin to be clamped and picked up and placed within a certain distance range. At least the rear shift fork pair 431, the middle shift fork pair 432 and the front shift fork pair 433 are provided on the outer fork plate, and at least the middle shift fork pair 432 and the front shift fork pair 433 are movably connected with the second-stage fork plate 4213. The movable connection means that the shift fork pair may not only move in a horizontal direction but also rotate in a plane perpendicular to the horizontal direction. The controller 80 determines whether the outer fork plate is extended in the direction of the shelf or in the direction of the workbin temporary storage mechanism 30 based on the position information and the angle information of the target workbin on the picking up shelf or the placing target shelf obtained from the control platform 70, and determines the number and position of the target shift fork pairs for clamping and picking up the target workbin based on the size information of the target workbin obtained from the control platform 70. Since at least the middle shift fork pair 432 and the front shift fork pair 433 are movably connected with the outer fork plate and the controller 80 can separately control the working states of the middle shift fork pair 432 and the front shift fork pair 433, the moving out distance or the rotation angle of the middle shift fork pair 432 and/or the front shift fork pair 433 can be adjusted according to the size of the target workbin, thereby enabling to match with the workbins of various sizes, being suitable for various goods picking up or placing scenes, and expanding the scope of application of the workbin picking up and placing system. Taking the rear shift fork pair 431 cooperating with the front shift fork pair 433 and the rear shift fork pair 431 being movably connected with the outer fork plate as an example, the specific picking up and placing process will be explained as follows: the front shift fork pair 433 is put away before picking up and placing the goods and is at the first position at this point; the outer fork plate is moved in along the side of the workbin; the rear shift fork pair 431 is put down and is at the second position at this point; and the workbin is pulled into the bearing platform of the workbin transporting device 1. When placing goods into the storage station of the workbin or workbin transporting device 1, the fixed rear shift fork pair 431 pushes the workbin from the bearing platform of the workbin transporting device 1 into the shelf or the temporary storage mechanism of the transporting device.

In some embodiments, as shown in FIG. 1, the control platform 70 can be implemented by a server, which can be wirelessly communicated with the controller 80 in the workbin transporting device 1. The installation position of the controller 80 in the workbin transporting device 1 is not limited, for example, the controller 80 can be installed in the travelling chassis 10 or other positions, as long as the controller 80 can be electrically connected with the travelling chassis 10, the telescopic fork assembly 42 and the shift fork pair assembly 43. Specifically, the controller 80 can be electrically connected with the travelling chassis 10, the telescopic fork assembly 42 and the shift fork pair assembly 43 through a cable.

Specifically, as shown in FIG. 3, the workbin transporting device 1 further includes a gantry 20. The workbin temporary storage mechanism 30 is provided at the first side of the gantry 20, and the workbin picking up and placing apparatus 40 is provided at the second side of the gantry 20. The rear shift fork pair 431, the middle shift fork pair 432 and the front shift fork pair 433 are sequentially provided along a first direction L away from the gantry 20.

In this embodiment, the gantry 20 provided on the travelling chassis 10 facilitate arranging of the temporary storage mechanism on the gantry 20 for temporarily storing the workbin to be transported.

In some embodiments, as shown in FIGs. 4a, 4b and 5, the telescopic fork assembly 42 includes telescopic forks 421 which are provided oppositely on both sides of the bearing part 41 and transmission mechanisms 422 which are provided oppositely on both sides of the bearing part 41. Each telescopic fork 421 includes an inner fixed plate 4211 connected with the gantry 20 and a at least one-stage fork plate slidably connected with the inner fixed plate 4211. The transmission mechanisms 422 are configured for driving the at least one-stage fork plate to perform the reciprocating telescopic movement; wherein a fork plate that can be telescoped farthest from the gantry 20 is the outer fork plate. The controller 80 controls, through the transmission mechanisms 422, the fork plate of the telescopic fork 421 to telescope in two directions along the horizontal direction to perform the reciprocating telescopic movement.

In this embodiment, each telescopic fork 421 includes the inner fixed plate 4211 connected with the gantry 20 and a at least one-stage fork plate slidably connected with the inner fixed plate 4211, and the transmission mechanisms 422 are configured for driving the at least one-stage fork plate to perform the reciprocating telescopic movement. As shown in FIGs. 4a, 6a-6c, an end of the inner fixed plate 4211 is connected with the gantry 20, and the telescopic fork 421 is a telescopic fork with two-stage telescoping function. The inner fixed plate 4211 is slidably connected with a two-stage fork plate, namely, the first-stage fork plate 4212 and the second-stage fork plate 4213, wherein the first-stage fork plate 4212 is directly slidably connected with the inner fixed plate 4211, and the second-stage fork plate 4213 is slidably connected with the first-stage fork plate 4212 and indirectly slidably connected to the inner fixed plate 4211. Therefore, when the telescopic fork 421 has two-stage telescoping function, the second-stage fork plate 4213 is further away from the inner fixed plate 4211 than the first-stage fork plate 4212 when the telescopic fork 421 is moved out, that is, the second-stage fork plate 4213 can be telescoped to the farthest position from the gantry 20, so the outer fork plate refers to the second-stage fork plate 4213. The controller 80 controls the telescopic fork 421 to reciprocate in the horizontal direction through the transmission mechanisms 422, enabling to complete the process of picking up and placing goods.

In some embodiments, as shown in FIGs. 4a and 4b, a plurality of through holes 4213a are provided on the outer fork plate, and at least the middle shift fork pair 432 is accommodated in the through holes 4213a. The controller 80 controls the shift fork pair to move out from one of the through holes 4213a, and changes a clamping distance between the rear shift fork pair 431 and the front shift fork pair 433, between the rear shift fork pair 431 and the middle shift fork pair 432, or between the middle shift fork pair 432 and the front shift fork pair 433 by changing the position of the through hole 4213a where the shift fork pair is located when moving out.

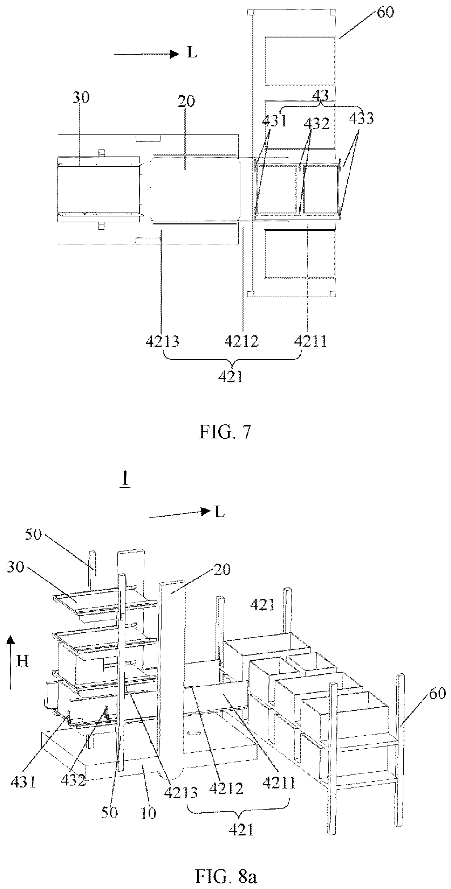

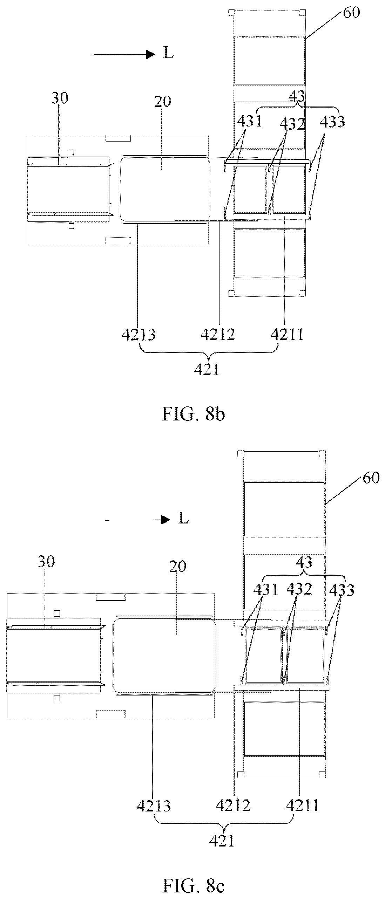

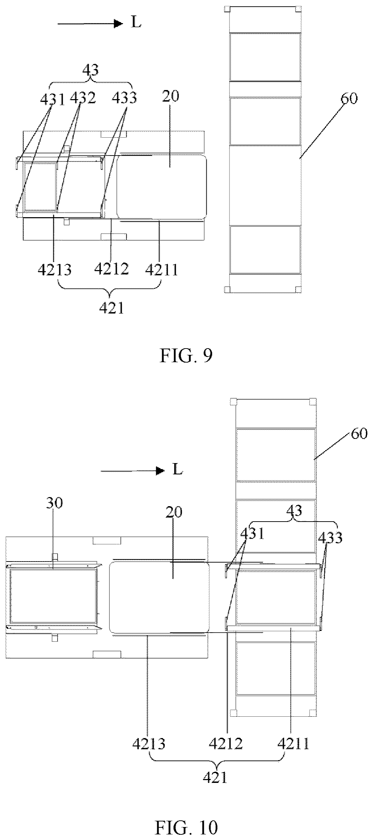

In this embodiment, the arrangement of the through holes 4213a enables the shift fork pair to be accommodated in the through holes 4213a. The shift fork pair is accommodated in the through holes 4213a before forking the workbin, so that the space can be reasonably utilized and the probability of interference with the workbin can be reduced. At least the middle shift fork pair 432 is accommodated in the through holes 4213a, that is, two middle shift forks located on the outer fork plate are both accommodated in the through holes 4213a. Further, the rear shift fork pair 431 and the front shift fork pair 433 can be accommodated in the through holes 4213a or on the side of the outer fork plate. The shift fork pair moves in the horizontal direction to move out from different through holes 4213a, enabling the clamping distance between the rear shift fork pair 431 and the front shift fork pair 433, between the rear shift fork pair 431 and the middle shift fork pair 432, or between the middle shift fork pair 432 and the front shift fork pair 433 to be changed. For example, if the position of the through hole 4213a where the front shift fork pair 433 is located when moving out is changed, both the clamping distance between the front shift fork pair 433 and the middle shift fork pair 432 and the clamping distance between the front shift fork pair 433 and the rear shift fork pair 431 can be changed. By changing the position of the through hole 4213a where the shift fork pair is located when moving out to adjust the clamping distance between the corresponding shift fork pairs, the workbin picking up and placing apparatus 40 of the workbin transporting device 1 is enabled to adjust the clamping distance according to different sizes of workbins, so as to clamp and pick up workbins of different sizes, thereby expanding the scope of application of the workbin transporting device 1. In addition, since the picking up and placing apparatus of the workbin transporting device 1 can adjust the clamping distance according to different sizes of workbins, it is not necessary to separately manufacture a plurality of workbin picking up and placing apparatuses 40 matching with different sizes of workbins, and the production cost of the workbin transporting device 1 can also be reduced. FIGs. 8a-8c are drawings showing the adjustment process of the workbin picking up and placing apparatus 40 picking up and placing two workbins of the same size, FIG. 8b is a schematic diagram of the shift fork pair before adjustment, FIG. 8c is a schematic diagram of the shift fork pair after adjustment, and FIG. 10 is a schematic diagram of the shift fork pair before adjustment during clamping and picking up a large workbin, wherein the adjustment direction is the first direction L for each case, so that the workbin picking up and placing apparatus 40 can perform adjustment according to the size of the workbin.

It should be noted that the change in the position of the through hole 4213a where the shift fork pair is located when moving out can also be manually adjusted. That is, as shown in FIG. 4b, the rear shift fork pair 431, the middle shift fork pair 432 and the front shift fork pair 433 can all be fixed to the outer fork plate through an L-shaped angle iron 45, where an end of the L-shaped angle iron 45 is fixedly connected with the outer fork plate, and the other end of the L-shaped angle iron 45 is provided with a through hole 4213a. The shift fork pair assembly 43 also includes a rotating shaft 46 rotatably connected with the rear shift fork pair 431, the middle shift fork pair 432 and the front shift fork pair 433. The rotating shaft 46 includes a first section 461 and a second section (not shown in the drawings). The diameter of the first section 461 is larger than the inner diameter of the through hole 4213a, and the second section passes through the through hole 4213a. The rear shift fork pair 431, the middle shift fork pair 432 and the front shift fork pair 433 are in threaded connection with the second section. The rotation of the first section 461 can drive the rear shift fork pair 431, the middle shift fork pair 432 and the front shift fork pair 433 to rotate between the first position and the second position, thereby realizing the position switching between the first position and the second position.

In some embodiment, at least one of the rear shift fork pair 431, the middle shift fork pair 432 and the front shift fork pair 433 is movably connected with the outer fork plate through an electric telescopic rod. The controller 80 is further electrically connected with the electric telescopic rod to control a telescoping of the electric telescopic rod, to change the clamping distance between the rear shift fork pair 431 and the front shift fork pair 433, between the rear shift fork pair 431 and the middle shift fork pair 432, or between the middle shift fork pair 432 and the front shift fork pair 433.

In this embodiment, the shift fork pair is movably connected with the outer fork plate through the electric telescopic rod, which facilitates to adjust the position of the shift fork pair in the horizontal direction, and enables the structure to be simple and easy to implement.

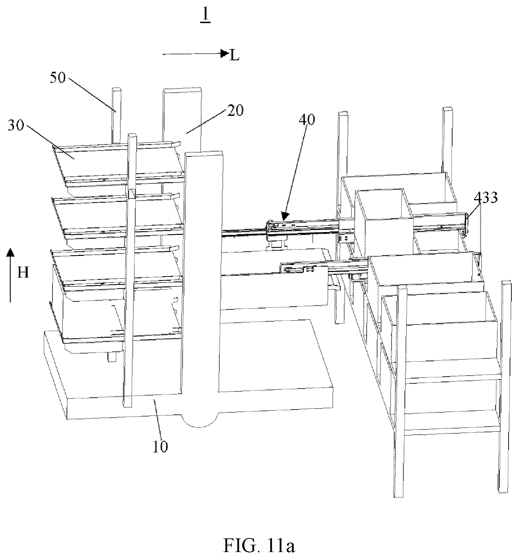

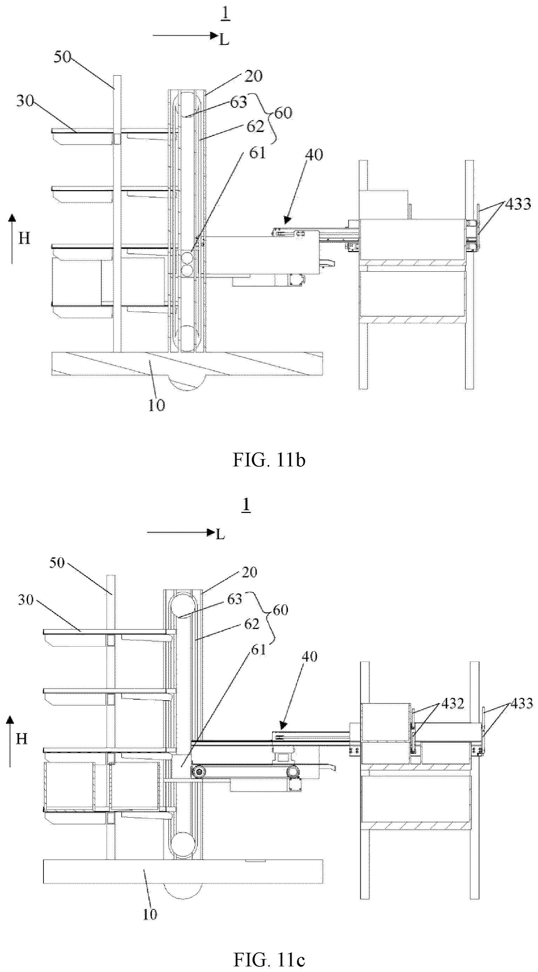

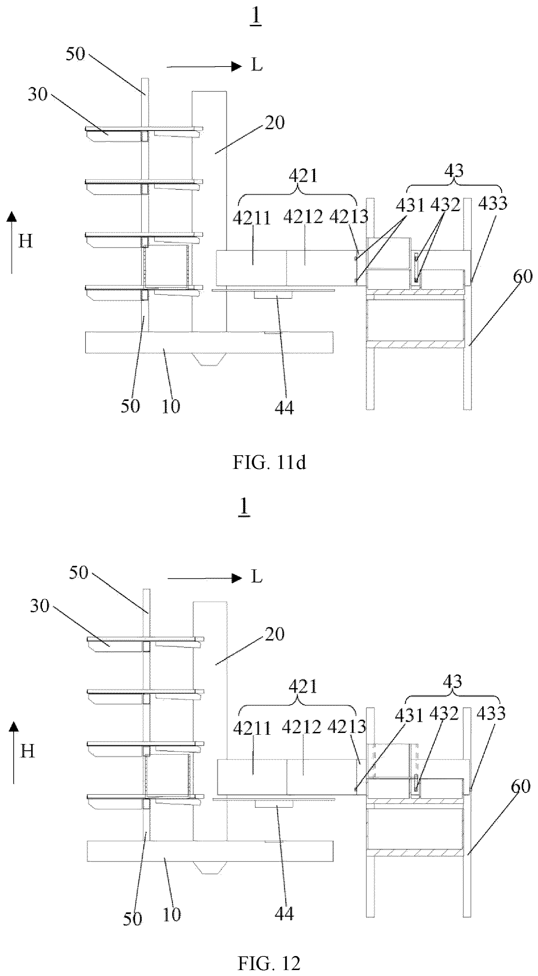

In some embodiments, as shown in FIG. 4a, FIG. 11a, FIG. 11b, FIG. 11c and FIG. 11d, for at least two shift fork pairs among the shift fork pairs, at least two groups of each of the at least two shift fork pairs are provided at intervals along a height direction H of the outer fork plate; the controller 80 separately controls each group of the two shift fork pairs.

In this embodiment, two groups of the front shift fork pair 433 and two groups of the rear shift fork pair 431 can be provided, or two groups of the front shift fork pair 433 and two groups of the middle shift fork pair 432 can be provided, or two groups of the middle shift fork pair 432 and two groups of the rear shift fork pair 431 can be provided, or even two groups of the front shift fork pair 433, two groups of the middle shift fork pair 432 and two groups of the rear shift fork pair 431 can be provided. As shown in FIG. 11a, FIG. 11b and FIG. 11c, two groups of the middle shift fork pair 432 and two groups of the front shift fork pair 433 are provided simultaneously, and as shown in FIG. 11d, two groups of the rear shift fork pair 431 and two groups of the middle shift fork pair 432 are provided simultaneously. By providing two groups of different shift fork pairs, it is suitable for more sizes of workbins. Preferably, two groups of the front shift fork pair 433, two groups of the middle shift fork pair 432 and two groups of the rear shift fork pair 431 are all provided. Providing two groups of the shift fork pair at intervals along the height direction H enables to increase the fixed points for the workbin when the workbin is clamped and picked up, so the workbin can be prevented from tilting, thereby reducing the probability of tipping of the workbin when being picked up and placed. FIG. 12 is an embodiment in which only one group of the shift fork pair is provided, which is a comparative embodiment of those in FIGs. 11a, 11b, 11c and 11d. A workbin of a larger height is easy to roll over when the workbin is clamped and picked up, so the embodiment shown in FIG. 12 is not suitable for clamping and picking up a workbin of a larger height. When only one group of the same shift fork pair is provided along the height direction H, in order to prevent rollover, the shift fork pair can be provided closer to the upper edge of the outer fork plate.

It should be understood that three groups, four groups and other number of groups of the shift fork pair can also be provided at intervals along the height direction H of the outer fork plate, which is not limited by the present application, and the simple change in the number of shift fork pairs in the height direction H belongs to the simple replacement of this solution.

In some embodiments, as shown in FIG. 6a, the front end of the workbin picking up and placing apparatus 40 is also provided with a code reading camera. The controller 80 obtains the size information of the target workbin and the positioning information of the picking up target shelf or the placing target shelf from the picking up instruction or the placing instruction; and obtains the position information and the angle information of the target workbin on the picking up shelf or the placing target shelf by the code reading camera scanning the information code of the picking up target shelf or the placing target shelf.

In this embodiment, the front end of the workbin picking up and placing apparatus 40 is provided with a code reading camera. For example, the code reading camera can be provided on the front end face of the inner fixed plate 4211 or the front end face of the bearing part 41, wherein the front end face refers to an end face at an end facing the target workbin when picking up goods. Specifically, the front end face of the inner fixed plate 4211 or the front end face of the bearing part 41 is provided with a groove, and the code reading camera is provided within the groove. The code reading camera scans the information code of the picking up target shelf or the placing target shelf, to obtain the position information and the angle information of the target workbin on the picking up shelf or the placing target shelf, wherein the information code can be a two-dimensional code or a bar code, etc.. Based on the position information and the angle information of the workbin, the controller 80 adjusts the direction in which the outer fork plate moves out and adjusts the distance between the target shift fork pairs to match with the size of the target workbin. After the outer fork plate is moved out to the target moving out position, the target shift fork pairs are controlled to rotate, to enable the telescopic fork assembly 42 to clamp and pick up the target workbin, and the target workbin is moved from the picking up target shelf to the bearing part 41 of the workbin picking up and placing apparatus 40 and moved to the workbin temporary storage mechanism 30, or the target workbin is moved from the workbin temporary storage mechanism 30 to the bearing part 41 of the workbin picking up and placing apparatus 40 and moved to the target placing shelf.

In some embodiments, as shown in FIG. 3, FIG. 5, FIG. 6a, FIG. 14 and FIG. 15, the bearing part 41 is one of an unpowered guide plate, powered belt assembly or roller assembly.

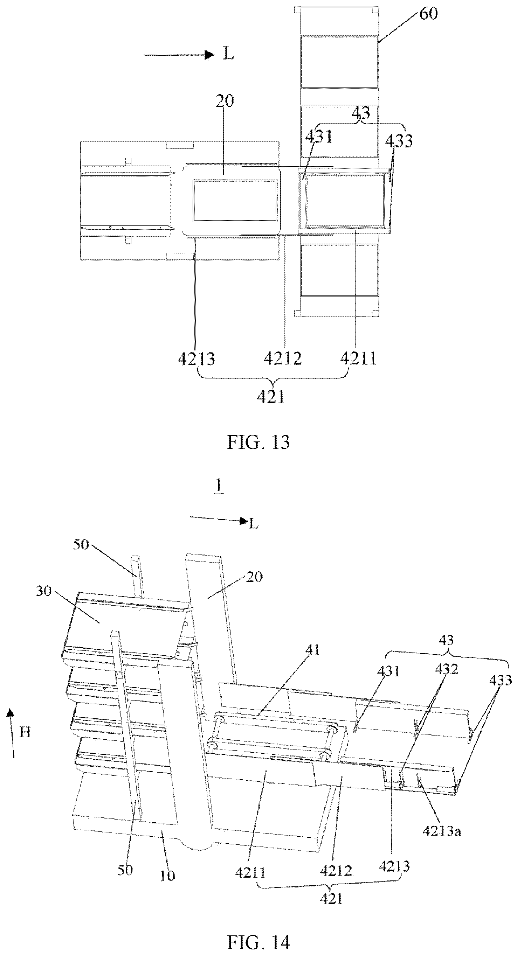

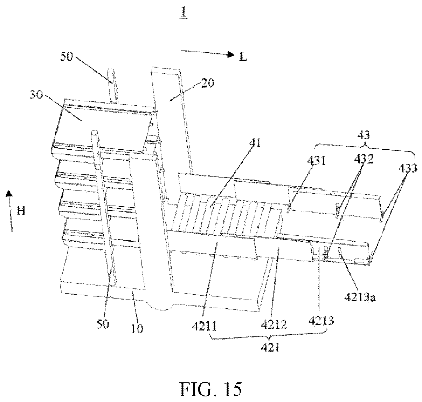

In this embodiment, as shown in FIG. 3, FIG. 4a, FIG. 5 and FIG. 6a, the bearing part 41 is provided as an unpowered guide plate, which is only used to provide support in clamping and picking up the workbin, so that the structure of the workbin picking up and placing apparatus 40 can be simplified. When the bearing part 41 is provided as a powered belt assembly as shown in FIG. 14 or a roller assembly as shown in FIG. 15, then during the workbin transport process, it can be directly and seamlessly engaged with a plane on which the goods is to be placed, that is, the goods can be automatically transported to the plane on which the goods is to be placed as long as the height of the bearing part 41 is adapted to the height of the plane on which the goods is to be placed, which reduces the number of times of repeatedly clamping and picking up the workbin, improves the picking up and placing effect and reduces the possibility of damage to the workbin.

Further, the bearing part 41 is the powered belt assembly or the roller assembly, and the controller 80 is further electrically connected with a power assembly of the belt assembly or the roller assembly to control the belt assembly or the roller assembly to drive the target workbin thereon to move.

In this embodiment, by the controller 80 being electrically connected with the belt assembly or the roller assembly, the controller 80 is enabled to control the real-time movement of the belt assembly or the roller assembly to transport the target workbin, and the belt assembly or the roller assembly can be in a standby state when the transport of the target workbin is not required, thereby achieving the purpose of saving electricity.

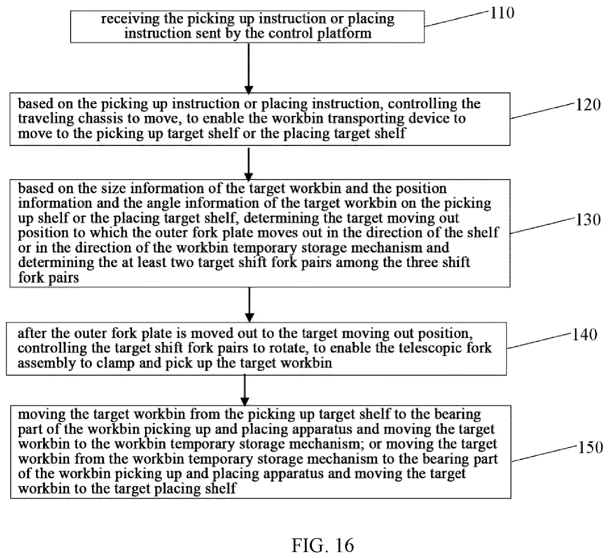

The second aspect of the present application provides a workbin picking up and placing method, as shown in FIG. 16, which is applied to the controller 80 of the above-mentioned workbin picking up and placing system, and the method includes:
Step 110: receiving the picking up instruction or placing instruction sent by the control platform 70.

Step 120: based on the picking up instruction or placing instruction, controlling the traveling chassis 10 to move, to enable the workbin transporting device 1 to move to the picking up target shelf or placing target shelf.

Step 130: based on the size information of the target workbin and the position information and the angle information of the target workbin on the picking up target shelf or the placing target shelf, determining the target moving out position to which the outer fork plate moves out in the direction of the shelf or in the direction of the workbin temporary storage mechanism 30 and determining at least two target shift fork pairs among the three shift fork pairs.

Step 140: after the outer fork plate is moved out to the target moving out position, controlling the target shift fork pairs to rotate, to enable the telescopic fork assembly 42 to clamp and pick up the target workbin.

Step 150: moving the target workbin from the picking up target shelf to the bearing part 41 of the workbin picking up and placing apparatus 40 and moving the target workbin to the workbin temporary storage mechanism 30; or moving the target workbin from the workbin temporary storage mechanism 30 to the bearing part 41 of the workbin picking up and placing apparatus 40 and moving the target workbin to the target placing shelf.

In this embodiment, the controller 80 controls the moving distance of the workbin picking up and placing system according to the instruction from the control platform 70, and the controller 80 issues an instruction to the transmission mechanisms 422 based on the size information of the target workbin and the position information and the angle information of the target workbin on the picking up shelf and placing target shelf. The telescoping distance of the telescopic fork 421 is adjusted through the transmission mechanisms 422 to match with the position where the target workbin is located, and the distance between the shift fork pairs is also adjusted through the controller 80 at the same time to match with the size of the target workbin, and the target workbin is obtained and transported by the cooperation of the adjusted telescopic fork 421 and the shift fork pair.

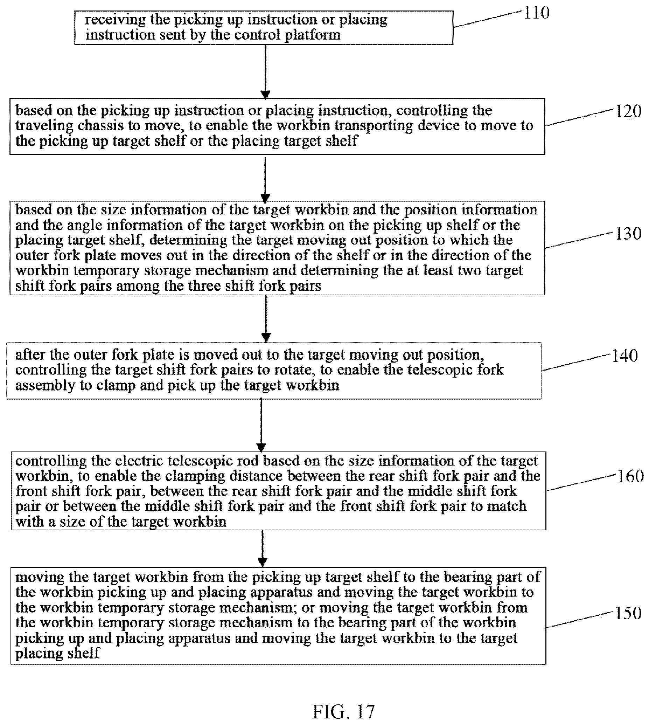

Further, in some implementations, at least one of the rear shift fork pair 431, the middle shift fork pair 432 and the front shift fork pair 433 is movably connected with the outer fork plate through an electric telescopic rod; the controller 80 is further electrically connected with the electric telescopic rod. As shown in FIG. 17, before the step of controlling, after the outer fork plate is moved out to the target moving out position, the target shift fork pairs to rotate to enable the telescopic fork assembly 42 to clamp and pick up the target workbin, that is, between steps 140 and 150 of the flow shown in FIG. 16, the method further includes:
Step 160: controlling the electric telescopic rod based on the size information of the target workbin, to enable the clamping distance between the rear shift fork pair 431 and the front shift fork pair 433, between the rear shift fork pair 431 and the middle shift fork pair 432 or between the middle shift fork pair 432 and the front shift fork pair 433 to match with a size of the target workbin.

In this embodiment, by the controller 80 issuing an instruction to the electric telescopic rod, the electric telescopic rod controls the distance between the shift fork pairs to match with the size of the target workbin.

In some embodiments, as shown in FIGs. 8a-8c, if the target workbin is two workbins horizontally placed on the picking up target shelf or the workbin temporary storage mechanism 30 in a front-rear direction, then the target shift fork pairs include the rear shift fork pair 431, the middle shift fork pair 432 and the front shift fork pair 433; the step of controlling, after the outer fork plate is moved out to the target moving out position, the target shift fork pairs to rotate to enable the telescopic fork assembly 42 to clamp and pick up the target workbin, includes: after the outer fork plate is moved out to the target moving out position, locating the middle shift forks located between the two workbins, controlling each target shift fork pair to rotate, to enable the telescopic fork assembly 42 to clamp and pick up the target workbin.

As shown in FIG. 10 and FIG. 13, if the target workbin is a workbin with a first size matching with the size of the bearing part 41, then the target shift fork pairs includes the rear shift fork pair 431 and the front shift fork pair 433; the step of controlling, after the outer fork plate is moved out to the target moving out position, the target shift fork pairs to rotate to enable the telescopic fork assembly 42 to clamp and pick up the target workbin, includes: after the outer fork plate is moved out to the target moving out position, controlling each target shift fork pair to rotate, to enable the telescopic fork assembly 42 to clamp and pick up the target workbin.

As shown in FIG. 9, if the target workbin is a workbin with a second size smaller than the size of the bearing part 41, then based on the target position of the target workbin on the workbin temporary storage mechanism 30, it is determined that the target shift fork pairs include the rear shift fork pair 431 and the middle shift fork pair 432, or the middle shift fork pair 432 and the front shift fork pair 433; the step of controlling, after the outer fork plate is moved out to the target moving out position, the target shift fork pairs to rotate to enable the telescopic fork assembly 42 to clamp and pick up the target workbin, includes: after the outer fork plate is moved out to the target moving out position, controlling each target shift fork pair to rotate, to enable the telescopic fork assembly 42 to clamp and pick up the target workbin.

By separately controlling any two of the front shift fork pair 433, the middle shift fork pair 432 and the rear shift fork pair 431, the distance between every two shift fork pairs can be changed by adjusting the position of one or two shift fork pairs, and the distance corresponds to the size of the target workbin, so that the workbin picking up and placing system can pick up and place target workbins of different sizes.

In some embodiments, as shown in FIGs. 4a, 11a, 11b, 11c and 11d, for at least two shift fork pairs among the shift fork pairs, at least two groups of each of the at least two shift fork pairs are provided at intervals along the height direction H of the outer fork plate. If at least two groups of the front shift fork pair 433 and at least two groups of rear shift fork pair 431 are provided at intervals along the height direction H of the outer fork plate, then two workbins placed up and down on the target shelf can be clamped and picked up, and the workbins are workbins with the first size matching with the size of the bearing part 41. If at least two groups of the front shift fork pair 433 and at least two groups of the middle shift fork pair 432 are provided or at least two groups of the rear shift fork pair 431 and at least two groups of the middle shift fork pair 432 are provided at intervals along the height direction H of the outer fork plate, then two workbins placed up and down on the picking up target shelf can be clamped and picked up, and the workbins are workbins with the second size smaller than the size of the bearing part 41.

In this embodiment, when at least two groups of the shift fork pair are provided at intervals along the height direction H of the outer fork plate, two-layer stacked target workbins or a high-size target workbin can also be picked up and placed, further expanding the scope of application of the workbin picking up and placing system.

In some embodiments, as shown in FIG. 6a, the front end of the workbin picking up and placing apparatus 40 is also provided with a code reading camera. The controller 80 obtains the size information of the target workbin and the positioning information of the picking up target shelf or the placing target shelf from the picking up instruction or the placing instruction; and obtains the position information and the angle information of the target workbin on the picking up shelf or the placing target shelf by the code reading camera scanning an information code of the picking up target shelf or the placing target shelf.

In this embodiment, the arrangement of the code reading camera can ensure the precision and accuracy of picking up and placing, and accelerate the efficiency of picking up and placing.

In some embodiments, as shown in FIG. 3, FIG. 5, FIG. 6a, FIG. 14 and FIG. 15, the bearing part 41 is a powered belt assembly or a roller assembly, and the controller 80 is further electrically connected with the power assembly of the belt assembly or the roller assembly to control the belt assembly or the roller assembly to drive the target workbin thereon to move. By the controller 80 being electrically connected with the belt assembly or the roller assembly, the controller 80 is enabled to control the real-time movement of the belt assembly or the roller assembly to transport the target workbin, and the belt assembly or the roller assembly can be in a standby state when transport of the target workbin is not required, thereby achieving the purpose of saving electricity.

The third aspect of the embodiments of the present application provides a workbin transporting device 1, as shown in FIG. 3, which is a schematic structure diagram of the workbin transporting device 1 provided by embodiments of the present application in an embodiment. As shown in FIG. 3, the workbin transporting device 1 includes a travelling chassis 10, a gantry 20 and a workbin picking up and placing apparatus 40. The gantry 20 is provided on the traveling chassis 10, and a workbin temporary storage mechanism 30 is provided on the first side of the gantry 20, and a workbin picking up and placing apparatus 40 is provided on the second side of the gantry 20, wherein the workbin picking up and placing apparatus 40 is configured for clamping and picking up a workbin from the outside and placing the workbin into the workbin temporary storage mechanism 30, or placing the workbin in the workbin temporary storage mechanism 30 on the outside. The outside can be a picking up shelf or a placing shelf, or a transmission line.

Referring to FIG. 4a, FIG. 4b and FIG. 5, FIG. 4a is a simplified structure diagram of the workbin transporting device 1 shown in FIG. 3 without the traveling wheel; FIG. 4b is an enlarged schematic structure diagram of part A in FIG. 4a; FIG. 5 is a schematic structure diagram of the workbin picking up and placing apparatus in FIG. 4a. As shown in FIG. 4a, FIG. 4b and FIG. 5, the workbin picking up and placing apparatus 40 includes a bearing part 41, a telescopic fork assembly 42 and a shift fork pair assembly 43. The bearing part 41 is connected with the gantry 20 for bearing the workbin.

The telescopic fork assembly 42 includes telescopic forks 421 which are provided oppositely on both sides of the bearing part 41 and transmission mechanisms 422 which are provided oppositely on both sides of the bearing part 41. Each telescopic fork 421 includes an inner fixed plate 4211 connected with the gantry 20 and a at least one-stage fork plate slidably connected with the inner fixed plate 4211. The transmission mechanisms 422 are configured for driving the at least one-stage fork plate to perform the reciprocating telescopic movement.

The shift fork pair assembly 43 is provided on the outer fork plate which is farthest from the inner fixed plate 4211 when the telescopic fork 421 is moved out. The shift fork pair assembly 43 at least includes a rear shift fork pair 431, a middle shift fork pair 432 and a front shift fork pair 433 which are sequentially provided on the outer fork plate along the first direction L away from the gantry 20. At least the middle shift fork pair 432 and the rear shift fork pair 431 are movably connected with the outer fork plate, and the middle shift fork pair 432 and the rear shift fork pair 431 can be switched between a first position parallel to the outer fork plate and a second position perpendicular to the outer fork plate.

According to the workbin transporting device 1 provided by an embodiment of the present application, the workbin transporting device 1 can move among different shelves by the travelling chassis 10, and can pick up and place the workbin by the workbin picking up and placing apparatus 40. The workbin picking up and placing apparatus 40 is provided with the telescopic fork assembly 42, and three shift fork pairs, namely the rear shift fork pair 431, the middle shift fork pair 432 and the front shift fork pair 433, are sequentially provided on the outer fork plate of the telescopic fork assembly 42. In this way, according to the different sizes of workbins, the workbin picking up and placing apparatus 40 can clamp and pick up the workbins through the cooperation of the middle shift fork pair 432 or the front shift fork pair 433 with the rear shift fork pair 431, or clamp and pick up the workbins through the cooperation of the three shift fork pairs, so that the workbin picking up and placing apparatus 40 of the workbin transporting device 1 can clamp workbins of different sizes, thus expanding the scope of application of the workbin transporting device 1.

As shown in FIG. 4a, FIG. 4b and FIG. 5, through the reciprocating telescopic movement of the two-stage fork plate of the telescopic fork 421 in the telescopic fork assembly 42, the telescopic fork 421 can reach the picking up and placing station of the shelf when moving out, and can be within the range of the workbin transporting device 1 itself when retracting, thereby enabling the workbin to be clamped and placed within a certain distance range.

In this embodiment, two telescopic forks 421 of the telescopic fork assembly 42 may be provided, and are provided oppositely on both sides of the bearing part 41. The telescopic forks can be a telescopic fork with one-stage telescoping function, or a telescopic fork with two or more-stage telescoping function.

Specifically, as shown in FIGs. 4a, 4b and 5, an end of the inner fixed plate 4211 of the telescopic fork assembly 42 is connected with the gantry 20, and the telescopic fork 421 is a telescopic fork with two-stage telescoping function. The inner fixed plate 4211 is slidably connected with the two-stage fork plate, namely the first-stage fork plate 4212 and the second-stage fork plate 4213, wherein the first-stage fork plate 4212 is directly slidably connected with the inner fixed plate 4211, and the second-stage fork plate 4213 is slidably connected to the first-stage fork plate 4212 and indirectly slidably connected to the inner fixed plate 4211. Therefore, when the telescopic fork 421 has two-stage telescoping function, the second-stage fork plate 4213 is further away from the inner fixed plate 4211 than the first-stage fork plate 4212 when the telescopic fork 421 is moved out, so the outer fork plate refers to the second-stage fork plate 4213. Taking the telescopic fork 421 with two-stage telescoping function as an example, the transmission mechanisms 422 are configured for controlling the reciprocating telescopic movement of the first-stage fork plate 4212 and the second-stage fork plate 4213, so that the first-stage fork plate 4212 and the second-stage fork plate 4213 can reach the picking up and placing station of the shelf when moving out, and can be within the range of the workbin transporting device 1 itself when retracting, thereby enabling the workbin to be clamped and placed within a certain distance.

At least the rear shift fork pair 431, the middle shift fork pair 432 and the front shift fork pair 433 are provided on the outer fork plate, and at least the middle shift fork pair 432 and the front shift fork pair 433 are movably connected with the outer fork plate. The movable connection means that the shift fork pair may not only move in the horizontal direction but also rotate in a plane perpendicular to the horizontal direction. Since at least the middle shift fork pair 432 and the front shift fork pair 433 are movably connected with the outer fork plate, then according to different sizes of the workbins, the middle shift fork pair 432 or the front shift fork pair 433 can be controlled to cooperate with the rear shift fork pair 431 to clamp and pick up the workbin, or the three shift fork pairs can cooperate simultaneously to clamp and pick up the workbin, so that the workbin picking up and placing apparatus 40 of the workbin transporting device 1 can clamp and pick up workbins of different sizes, thus expanding the scope of application of the workbin transporting device 1. Taking the rear shift fork pair 431 cooperating with the front shift fork pair 433 and the front shift fork pair 433 being rotatably connected with the outer fork plate as an example, the specific picking up and placing process will be explained as follows: when picking up and placing goods, the front shift fork pair 433 is put away and is at the first position at this time; the outer fork plate is moved in along the side of the workbin; the front shift fork pair 433 is put down and is perpendicular to the outer fork plate at this point, that is, the front shift fork pair 433 is at the second position at this point; and the workbin is pulled into the bearing platform of the workbin transporting device 1. When placing goods into the storage station of the workbin or workbin transporting device 1, the fixed rear shift fork pair 431 pushes the workbin from the bearing platform of the workbin transporting device 1 into the shelf or the temporary storage mechanism of the transporting device.

It should be noted that, as shown in FIG. 4a, the outer fork plate refers to a one-stage fork plate farthest from the gantry 20 when the telescopic fork 421 is moved out. For example, when the telescopic fork 421 has only the one-stage telescoping function, the first-stage fork plate 4212 connected with the inner fixed plate 4211 is the outer fork plate; when the telescopic fork 421 has the two-stage telescoping function, the first-stage fork plate 4212 is connected with the inner fixed plate 4211 and the second-stage fork plate 4213 connected with the first-stage fork plate 4212 is the outer fork plate. Similarly, when the telescopic fork 421 has a three-stage telescoping function, the first-stage fork plate 4212 is connected with the inner fixed plate 4211, the second-stage fork plate 4213 is connected with the first-stage fork plate 4212, and the third-stage fork plate (not shown in the drawing) connected with the second-stage fork plate 4213 is the outer fork plate.

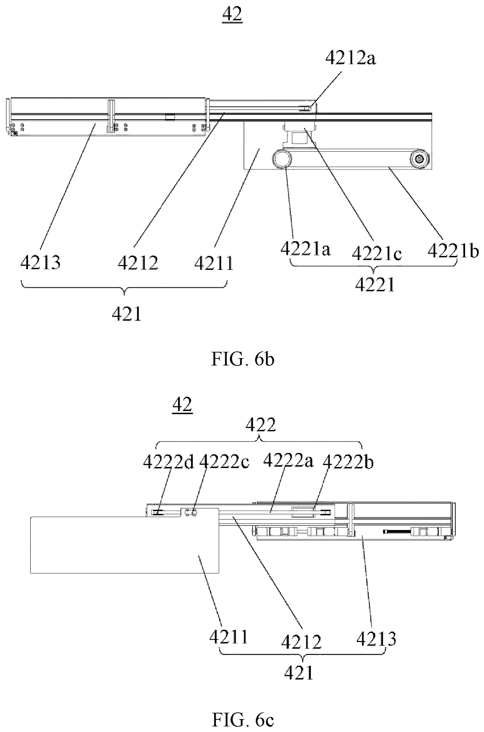

Referring to FIG. 5 and FIGs. 6a-6c, FIG. 5 shows the first structure of the workbin picking up and placing apparatus, and FIGs. 6a-6c show the second structure of the workbin picking up and placing apparatus. In both structures, the working principle of the telescopic fork 421 is the same. Specifically, in a feasible implementation, as shown in FIG. 6a, FIG. 6b and FIG. 6c, the telescopic fork 421 is a telescopic fork with two-stage telescoping function, and a transmission mechanism 422 includes a two-stage dragging system driven by a motor, namely a first-stage dragging system 4221 and a second-stage dragging system 4222. An end of the first-stage dragging system 4221 is connected with the inner fixed plate 4211 and the other end of the first-stage dragging system 4221 is connected with the first-stage fork plate 4212. An end of the second-stage dragging system 4222 is connected with the inner fixed plate 4211, and the other end of the second-stage dragging system 4222 is connected with the second-stage fork plate 4213. Specifically, the first-stage dragging system 4221 includes a synchronous belt 4221b, a synchronous wheel 4221a and a transmission member 4221c, wherein the synchronous wheel 4221a is provided on the inner fixed plate 4211, and the synchronous belt 4221b is sleeved on the synchronous wheel 4221a, and an end of the transmission member 4221c is fixedly connected with the synchronous wheel 4221a, and the other end of the transmission member 4221c is fixedly connected with the first-stage fork plate 4212, wherein one synchronous wheel 4221a can reciprocate, to allow the transmission member 4221c to reciprocate under the transmission of the synchronous belt 4221b, thus enabling the first-stage fork plate 4212 can move out and retract. The second-stage dragging system includes a belt 4222a, a first fixed block 4222b and a second fixed block 4222c. The first-stage fork plate 4212 is provided with two mounting holes 4212a at intervals. The belt 4222a passes through the two mounting holes 4212a of the first-stage fork plate and is sleeved on the first-stage fork plate 4212, and the belt 4222a is fixedly connected with the inner fixed plate through the first fixing block 4222b, and the second-stage fork plate 4213 is fixed on the belt 4222a through the second fixing block 4222c. When the first-stage dragging system drags the first-stage fork plate 4212 to reciprocate, since the belt 4222a is fixed on the inner fixed plate and sleeved between the mounting holes 4212a of the first-stage fork plate 4212, the motion of the first-stage fork plate 4212 will drive the belt 4222a to reciprocate between the two mounting holes 4212a, thus driving the second-stage fork plate 4213 fixed on the belt 4222a to reciprocate. The first-stage dragging system 4221 and the second-stage dragging system 4222 drag the first-stage fork plate 4212 and the second-stage fork plate 4213 to move out or retract, thus enabling the first-stage fork plate 4212 and the second-stage fork plate 4213 to reach the goods storage and picking up station of the shelf.

Furthermore, the second-stage dragging system may also include two pulleys 4222d, which are respectively provided within two mounting holes 4212a, and the belt 4222a surrounds the pulleys 4222d and is installed between the two mounting holes 4212a. The belt 4222a can be rotated more smoothly by arranging the pulleys 4222d.

Referring to FIG. 5 and FIG. 6a-6c, the difference in the structure between the two types of workbin picking up and placing apparatus is that two groups of the middle shift fork pair 432 and two groups of the front shift fork pair 433 are provided in FIG. 5, while only one group of the shift fork pair 432 and one group of the front shift fork pair 433 are provided in FIGs. 6a-6c. In practical application, the number of groups can be set according to the height of the goods to be picked up and placed, which can be one group, two groups, or more groups, and is mot limited here.

As shown in FIG. 4b, FIG. 5 and FIG. 6a, the shift fork pair assembly 43 is installed on the outer fork plate. At least the middle shift fork pair 432 and the front shift fork pair 433 in the shift fork pair assembly 43 can be rotated and swung to switch between a first position parallel to the outer fork plate and a second position perpendicular to the outer fork plate, and cooperate with each other to complete the operation of pushing or hooking the goods. As shown in FIG. 4b, the rear shift fork pair 431 includes two rear shift forks respectively provided on the outer fork plate on both sides of the bearing part 41, and the two rear shift forks are provided oppositely. Similarly, the middle shift fork pair 432 also includes two middle shift forks provided oppositely, and the front shift fork pair 433 also includes two front shift forks provided oppositely.

In this embodiment, the middle shift fork pair 432 and the front shift fork pair 433 can be adjusted between the first position and the second position, and can be separately controlled. Therefore, the rear shift fork pair 431 can work together with the middle shift fork pair 432, or can work together with the front shift fork pair 433, or the middle shift fork pair 432 can work together with the front shift fork pair 433, thus enabling different sizes of workbins can be clamped and picked up, which is suitable for various application scenes. As shown in FIGs. 8b and 8c, the rear shift fork pair 431 may also be an adjustable shift fork pair that can be adjusted between the first position and the second position.

It can be understood that more shift fork pairs can be provided on the outer fork plate, for example, four shift fork pairs or five shift fork pairs are provided on the outer fork plate, so that workbins of more different sizes can be clamped and picked up through the cooperation between different shift fork pairs. Further, when there are only three shift fork pairs, the middle shift fork pair 432 may be provided closer to the rear shift fork pair 431, or closer to the front shift fork pair 433, or be provided in the middle between the rear shift fork pair 431 and the front shift fork pair 433. In the case that the middle shift fork pair 432 is not located in the middle between the rear shift fork pair 431 and the front shift fork pair 433, the workbin picking up and placing apparatus 40 of the workbin transporting device 1 is also enabled to clamp and pick up three types of workbins with different sizes without adjusting the distance between the shift fork pairs.

Referring to FIG. 7, FIG. 7 is a sectional diagram of the workbin picking up and placing apparatus picking up and placing a large workbin and a small workbin. At this time, the rear shift fork pair 431, the middle shift fork pair 432 and the front shift fork pair 433 work simultaneously.

Referring to FIGs. 8a-8c, FIGs. 8a-8c are schematic structure drawings for clamping and picking up two small workbins of the same size. At this time, the rear shift fork pair 431, the middle shift fork pair 432 and the front shift fork pair 433 work simultaneously, so that two workbins can be clamped and picked up simultaneously, and the efficiency of picking up and placing workbins can be improved. FIG. 7 is a schematic diagram of clamping and picking up only one small workbin. By selecting the middle shift fork pair 432 and the front shift fork pair 433 to cooperate, the workbin can be placed farther away. Referring to FIG. 10, FIG. 10 is a schematic diagram of clamping and picking up a large workbin. By selecting the rear shift fork pair 431 and the front shift fork pair 433 to cooperate, a workbin of larger size can be clamped and picked up.

FIGs. 8a-8c are diagrams showing the adjustment process of the workbin picking up and placing apparatus picking up and placing two workbins of the same size, FIG. 8b is the schematic diagram of the shift fork pair before adjustment, and FIG. 8c is the schematic diagram of the shift fork pair after adjustment; FIG. 10 is a schematic diagram of the shift fork pair before adjustment during the process of clamping and picking up a large workbin, wherein the adjustment direction is the first direction L, thus enabling the workbin picking up and placing apparatus 40 to adjust according to the size of the workbin.

In some embodiments, as shown in FIG. 4a, FIG. 11a, FIG. 11b, FIG. 11c and FIG. 11d, for at least two shift fork pairs among the shift fork pairs, at least two groups of each of at the least two shift fork pairs are provided at intervals along the height direction H of the outer fork plate.

In this embodiment, two groups of the front shift fork pair 433 and two groups of the rear shift fork pair 431 can be provided; or two groups of the front shift fork pair 433 and two groups of the middle shift fork pair 432 can be provided; or two groups of the middle shift fork pair 432 and the rear shift fork pair 431 can be provided; or even two groups of the front shift fork pair 433, two groups of the middle shift fork pair 432 and two groups of the rear shift fork pair 431 can be provided. As shown in FIG. 11a, FIG. 11b and FIG. 11c, two groups of the middle shift fork pair 432 and two groups of the front shift fork pair 433 are provided simultaneously, and as shown in FIG. 11d, two groups of the rear shift fork pair 431 and two groups of the middle shift fork pair 432 are provided simultaneously. By providing two groups of different shift fork pairs, it can be suitable for workbins of more sizes. Preferably, two groups of the front shift fork pair 433, two groups of the middle shift fork pair 432 and two groups of the rear shift fork pair 431 are provided. Providing two groups of the shift fork pair at intervals along the height direction H enables to increase the fixed points for the workbin when the workbin is clamped and picked up, so the workbin can be prevented from tilting, thereby reducing the probability of tipping of the workbin when being picked up and placed. FIG. 12 is an embodiment in which only one group of the shift fork pair are provided, which is a comparative embodiment of those in FIGs. 11a, 11b, 11c and 11d. A workbin of a larger height is easy to roll over when the workbin is clamped and picked up, so the embodiment shown in FIG. 12 is not suitable for clamping and picking up a workbin of a larger height. When only one group of the same shift fork pair are provided along the height direction H, in order to prevent rollover, the shift fork pair can be provided closer to the upper edge of the outer fork plate.

It can be understood that three groups, four groups, other number of groups of the shift fork pairs can also be provided at intervals along the height direction H of the outer fork plate, which is not limited by the present application, and the simple change in the number of shift fork pairs in the height direction H belongs to the simple replacement of this solution.

In some embodiments, as shown in FIGs. 4a and 4b, a plurality of through holes 4213a are provided on the outer fork plate, and at least the middle shift fork pair 432 is accommodated in the through holes 4213a, and the rear shift fork pair 431, the middle shift fork pair 432 and the front shift fork pair 433 moves out from one of the through holes 4213a respectively. By changing the position of the through hole 4213a where the shift fork pair is located when moving out, the clamping distance between the rear shift fork pair 431 and the front shift fork pair 433, between the rear shift fork pair 431 and the middle shift fork pair 432, or between the middle shift fork pair 432 and the front shift fork pair 433 can be changed.

In this embodiment, the arrangement of the through holes 4213a enables the shift fork pair to be accommodated in the through holes 4213a. The shift fork pair is accommodated in the through holes 4213a before forking the workbin, so that the space can be reasonably utilized and the probability of interference with the workbin can be reduced. At least the middle shift fork pair 432 is accommodated in the through holes 4213a, that is, two second shift forks located on the outer fork plate are both accommodated in the through holes 4213a. Further, the rear shift fork pair 431 and the front shift fork pair 433 can be accommodated in the through holes 4213a or on the side of the outer fork plate. The shift fork pair moves in the horizontal direction to move out from different through holes 4213a, enabling the clamping distance between the rear shift fork pair 431 and the front shift fork pair 433, distance the rear shift fork pair 431 and the middle shift fork pair 432, or distance the middle shift fork pair 432 and the front shift fork pair 433 to be changed. For example, if changing the position of the through hole 4213a where the front shift fork pair 433 is located when moving out is changed, both the clamping distance between the front shift fork pair 433 and the middle shift fork pair 432 and the clamping distance between the front shift fork pair 433 and the rear shift fork pair 431 can be changed. By changing the position of the through holes 4213a where the shift fork pair is located when moving out to adjust the clamping distance between the corresponding shift fork pairs, the workbin picking up and placing apparatus 40 of the workbin transporting device 1 is enabled to adjust the clamping distance according to different sizes of workbins, so as to clamp and pick up workbins of different sizes, thereby expanding the scope of application of the workbin transporting device 1. In addition, since the picking up and placing apparatus of the workbin transporting device 1 can adjust the clamping distance according different sizes of workbins, it is not necessary to separately manufacture a plurality of workbin picking up and placing apparatuses 40 matching with different sizes of workbins, and the production cost of the workbin transporting device 1 can also be reduced. FIGs. 8a-8c is drawings showing the adjustment process of the workbin picking up and placing apparatus picking up and placing two workbins of the same size, FIG. 8b is a schematic diagram of the shift fork pair before adjustment, FIG. 8c is a schematic diagram of the shift fork pair after adjustment, and FIG. 10 is a schematic diagram of the shift fork pair before adjustment, wherein the adjustment direction is the first direction L, so that the workbin picking up and placing apparatus 40 can be adjusted according to the size of the workbin.

The position of the through hole where the shift fork pair is located when moving out can be adjusted automatically or manually. That is, as shown in FIG. 4b, the rear shift fork pair 431, the middle shift fork pair 432 and the front shift fork pair 433 can all be fixed to the outer fork plate through an L-shaped angle iron 45, where an end of the L-shaped angle iron 45 is fixedly connected with the outer fork plate, and the other end of the L-shaped angle iron 45 is provided with a through hole 4213a. The shift fork pair assembly 43 also includes a rotating shaft 46 rotatably connected with the rear shift fork pair 431, the middle shift fork pair 432 and the front shift fork pair 433. The rotating shaft 46 includes a first section 461 and a second section (not shown in the drawings). The diameter of the first section 461 is larger than the inner diameter of the through hole 4213a, and the second section passes through the through hole 4213a. The rear shift fork pair 431, the middle shift fork pair 432 and the front shift fork pair 433 are in threaded connection with the second section. The rotation of the first section 461 can drive the rear shift fork pair 431, the middle shift fork pair 432 and the front shift fork pair 433 to rotate between the first position and the second position, thereby realizing the position switching between the first position and the second position.

In some embodiments, as shown in FIG. 4a, the front shift fork pair 433 is located at an end of the outer fork plate on the side away from the gantry 20, the rear shift fork pair 431 is located at an end of the outer fork plate on the side close to the gantry 20, and the through holes 4213a are used to accommodate the middle shift fork pair 432. The installation position of the middle shift fork pair 432 is changed to change the clamping distance between the rear shift fork pair 431 and the middle shift fork pair 432, and between the middle shift fork pair 432 and the front shift fork pair 433.

In this embodiment, the front shift fork pair 433 and the rear shift fork pair 431 are respectively provided at the end of the outer fork plate on the side away from the gantry 20 and the end of the outer fork plate on the side close to the gantry 20, so that the distance between the front shift fork pair 433 and the rear shift fork pair 431 is the largest, thus enabling workbins of larger sizes to be clamped and picked up. If the position of the middle shift fork pair 432 is changed, the clamping distance between the rear shift fork pair 431 and the middle shift fork pair 432 and the clamping distance between the front shift fork pair 433 and the middle shift fork pair 432 can be changed, so that the workbin picking up and placing apparatus 40 of the workbin transporting device 1 to adjust according to different sizes of workbins, thus enabling to clamp and pick up workbins of more different sizes, and further expanding the scope of application of the workbin transporting device 1.

In some embodiments, at least one of the rear shift fork pair 431, the middle shift fork pair 432 and the front shift fork pair 433 is movably connected with the outer fork plate through a telescopic rod to change the clamping distance between the rear shift fork pair 431 and the middle shift fork pair 432, between the rear shift fork pair 431 and the front shift fork pair 433, or between the middle shift fork pair 432 and the front shift fork pair 433.

In this embodiment, at least one of the rear shift fork pair 431, the middle shift fork pair 432 and the front shift fork pair 433 is movably connected with the outer fork plate through a telescopic rod, and the clamping distance between the respective shift fork pairs is controlled through the telescoping of the telescopic rod. Therefore, there is no need to repeatedly disassemble each installed shift fork pair, as long as the through holes 4213a are provided at the positions with a proper clamping distance to enable the shift fork pair to switch between the second position perpendicular to the outer fork plate and the first position parallel to the outer fork plate.

Further, in order to reduce the number of through holes 4213a, the rear shift fork pair 431 and the front shift fork pair 433 can be located at two ends of the outer fork plate when the telescopic rod is in a contracted state.

In some embodiments, as shown in FIGs. 10 and 13, the rear shift fork pair 431 is movably or fixedly connected with the outer fork plate.

In this embodiment, the rear shift fork pair 431, which is provided closest to the gantry 20, can be set to be fixed, as shown in FIG. 13, that is, the rear shift fork pair 431 is fixedly connected with the outer fork plate to simplify the structure. The rear shift fork pair 431 can also be set to be adjustable, as shown in FIG. 10, to switch between the first position and the second position, thereby reducing the probability of interference between the workbin picking up and placing apparatus 40 and the workbin. Moreover, since the position of the rear shift fork pair 431 can also be adjusted, the workbin picking up and placing apparatus 40 can flexibly select the shift fork pair for work. The movable connection between the rear shift fork pair 431 and the outer fork plate means that the rear shift fork pair 431 may not only move in the horizontal direction but also rotate in a plane perpendicular to the horizontal direction.

In some embodiments, as shown in FIG. 7 to FIG. 10, the transmission mechanism 422 can telescope in two directions along the horizontal direction (i.e. the first direction L), so that the outer fork plate can pick up and place the workbin on both sides of the gantry 20. FIG. 7, FIG. 8b, FIG. 8c and FIG. 10 show that the transmission rod mechanism 422 telescopes along the first direction L, and FIGs. 8a and 9 show that the transmission rod mechanism 422 telescopes along the opposite direction of the first direction L in the horizontal direction.

In this embodiment, because the transmission mechanism 422 can telescope in two directions along the horizontal direction, the workbin can be picked up and placed on both sides of the gantry 20 directly, which further simplifies the steps of picking up and placing the workbin and improves the efficiency of picking up and placing the workbin. Further, it can be used without a rotating assembly, which can simplify the structure of the workbin picking up and placing apparatus.

In some embodiments, as shown in FIG. 3, there are a plurality of temporary storage mechanisms 30, and the plurality of temporary storage mechanisms 30 are provided at intervals along the height direction H of the gantry 20 assembly. The workbin transporting device 1 also includes a lifting and descending assembly 60, which is slidably connected with the gantry 20. The inner fixed plate 4211 and the bearing part 41 are connected with the gantry 20 through the lifting assembly 60, so that the lifting and descending assembly 60 drives the workbin picking up and placing apparatus 40 to move along the height direction H of the gantry 20, so as to adapt to the heights of temporary storage mechanisms at different heights.

In the embodiment of the present application, as shown in FIG. 3, a plurality of temporary storage mechanisms are provided at intervals along the direction of the gantry 20. The storage space for temporarily storing workbins can be increased, so that the workbin transporting device 1 can transport multiple workbins at one time, thereby improving the transporting efficiency. The lifting and descending assembly 60 is slidably connected with the gantry 20, so that the lifting and descending assembly 60 can be lifted and lowered along the gantry 20. The workbin picking up and placing apparatus 40 is installed on the lifting and descending assembly 60 to indirectly connect with the gantry 20. When the lifting and descending assembly 60 moves in the height direction H relative to the gantry 20, the workbin picking up and placing apparatus 40 can also move in the height direction H relative to the gantry 20. Through the lifting and descending movement of the lifting and descending assembly 60, the workbin picking up and placing apparatus 40 is moved to a position adapted to the height of the workbin, so as to transport the workbin, for example, from the temporary storage mechanism to the shelf or conveyor belt, or from the shelf or conveyor belt to the temporary storage mechanism, and then transport the workbin to the next production line, etc.

Specifically, as a feasible implementation, as shown in FIG. 3, the lifting and descending assembly includes a lifting plate 61, a chain 62, two chain wheels 63 and a driving motor (not shown in the figure), wherein the lifting plate 61, the chain 62 and the two chain wheels 63 are provided in the inner cavity of the gantry 20, the lifting plate 61 is fixedly connected with the chain 62, the chain wheels 63 are respectively provided at the upper and lower ends of the gantry 20, and the chain 62 is sleeved on the chain wheels 63. A through slot (not shown in the figure) is provided on the side of the gantry 20 facing the picking up and placing apparatus, so that the lifting plate 61 can be lifted and descended in the through slot. The workbin picking up and placing apparatus 40 is fixed on the lifting plate 61 through the through slot, and the driving motor drives one of the chain wheels 63 to rotate. The rotation of the chain wheel 63 drives the chain 62 to reciprocate, and enables the lifting plate 61 to be lifted and descended, so that the workbin picking up and placing apparatus can be lifted and descended under the action of the lifting plate 61, thus picking up and placing goods at different heights.

As another feasible implementation, the lifting and descending assembly includes a slider slidably connected with the gantry 20 and a lead screw motor for driving the slider to lift and descend. The workbin picking up and placing apparatus 40 is fixedly connected to the slider, and when the slider is lifted and descended, the workbin picking up and placing apparatus 40 is also lifted and descended. The sliding connection between the slider and the gantry 20 can be achieved through a slide rail and a slide groove, or by sleeving the slider on a sliding shaft.

In some embodiments, as shown in FIGs. 11d and 12, a bottom of the bearing part 41 is provided with a rotating bearing assembly 44, and the bearing part 41 is rotatably mounted to the lifting and descending assembly through the rotate supporting assembly 44.

In this embodiment, the bearing part 41 is rotatably connected with the lifting and descending assembly through the rotating bearing assembly 44, so that the bearing part 41 can rotate 360 degrees in the same plane to meet the requirements of picking up goods in all directions. It can be understood that the rotating bearing assembly 44 and telescoping of the transmission mechanism 422 in two directions can be provided simultaneously.

In some embodiments, the workbin transporting device 1 further includes a controller; and the controller is electrically connected with the travelling chassis 10, the transmission mechanisms 422 of the telescopic fork assembly 42, and the shift fork pair assembly 43. The controller is mainly configured to control the movements of the travelling chassis 10, the transmission mechanisms 422 of the telescopic fork assembly 42, and the shift fork pair assembly 43, and also to control the movements of the rotate supporting assembly 44 and the lifting and descending assembly 60. Specifically, the controller may be integrated inside the rotate supporting assembly 44. In addition, the telescopic rod for adjusting the distance between the shift fork pairs can be an electric telescopic rod, and the controller can also be electrically connected with the electric telescopic rod to enable the automatic adjustment of the distance between the shift fork pairs.

When two groups of the shift fork pair are provided at intervals along the height direction H of the outer fork plate, the controller can separately control each group of the two groups of the shift fork pair, so that the workbin picking up and placing system can also be used for picking up and placing a single-layer stacked workbin, a two-layer stacked workbin, a workbin with a smaller size or a workbin of a larger size, further expanding the scope of application of the workbin picking up and placing system.

In some embodiments, as shown in FIGs. 3, 4a, 8a, 11a-11d, 12, 14 and 15, the workbin temporary storage mechanism 30 has a tray structure; and the workbin picking up and placing apparatus 40 also includes a pair of support columns 50 provided on the travelling chassis 10 and spaced from the gantry 20. The workbin temporary storage mechanism 30 is fixed on the gantry 20 and the support columns 50, and extended in a direction away from the support columns 50.

In this embodiment, the support columns 50 also support the workbin temporary storage mechanism 30, which can increase the maximum load-bearing capacity of the workbin temporary storage mechanism 30. Moreover, due to the arrangement of the support columns 50, the plane of the workbin temporary storage mechanism 30 on which the goods will be placed can be appropriately extended, so that the workbin with larger size or more workbins can be placed on the workbin temporary storage mechanism 30.

It can be understood that only the telescoping distance of the telescopic fork 421 needs to be extended in order to place the larger workbin or more workbins.

In some embodiments, as shown in FIGs. 3, 14 and 15, the bearing part 41 is one of unpowered guide plate, powered belt assembly or roller assembly.

In this embodiment, as shown in FIG. 4a, FIG. 5 and FIG. 6a, the bearing part 41 is set as a unpowered guide plate, which is only used to provide support in clamping and picking up the workbin, so that the structure of the workbin picking up and placing apparatus 40 can be simplified. When the bearing part 41 is provided as a powered belt assembly as shown in FIG. 14 or a roller assembly as shown in FIG. 15, during the workbin transport process, it can be directly and seamlessly engaged with a plane on which the goods is to be placed, that is, the goods can be automatically transported to the plane on which the goods is to be placed as long as the height of the bearing part 41 is adapted to the height of the plane on which the goods is to be placed, which reduces the number of times of repeatedly clamping and picking up the workbin, improves the picking up and placing effect and reduces the possibility of damage to the workbin.

The second aspect of the embodiments of the present application provides a workbin picking up and placing apparatus 40, which is applied to the above-mentioned workbin transporting device 1. The workbin picking up and placing apparatus 40 includes a bearing part 41, a telescopic fork assembly 42 and a shift fork pair assembly 43. The bearing part 41 is connected with the gantry 20 for bearing the workbin. The telescopic fork assembly 42 includes telescopic forks 421 which are provided oppositely on both sides of the workbin bearing plane and transmission mechanisms 422 which are provided oppositely on both sides of the workbin bearing plane. Each telescopic fork 421 includes an inner fixed plate 4211 connected with the gantry and a at least one-stage fork plate slidably connected with the inner fixed plate 4211. The transmission mechanisms 422 are configured for driving the at least one-stage fork plate to reciprocate. The shift fork pair assembly 43 is provided on the one-stage outer fork plate far away from the inner fixed plate 4211 when the telescopic fork 421 is moved out. The shift fork pair assembly at least includes a rear shift fork pair 431, a middle shift fork pair 432 and a front shift fork pair 433 which are sequentially provided on the outer fork plate in the direction away from the gantry 20. At least the middle shift fork pair 432 and the front shift fork pair 433 are movably connected with the outer fork plate, and the middle shift fork pair 432 and the front shift fork pair 433 can switch between a first position parallel to the outer fork plate and a second position perpendicular to the outer fork plate.

In this embodiment, the workbin picking up and placing apparatus 40 includes an outer fork plate and a transmission mechanism 422 for controlling the outer fork plate to perform telescopic movement. The transmission mechanism 422 can control the distance at which the outer fork plate is moved out, thus enabling the workbin to be clamped and picked up and placed within a certain distance. At least the rear shift fork pair 431, the middle shift fork pair 432 and the front shift fork pair 433 are provided on the outer fork plate, and at least the middle shift fork pair 432 and the front shift fork pair 433 are movably connected with the second-stage outer fork plate. According to different sizes of the workbins, the middle shift fork pair 432 or the front shift fork pair 433 can be controlled to cooperate with the rear shift fork pair 431 to clamp and pick up the workbin, or three shift fork pairs can cooperate simultaneously to clamp and pick up the workbin, so that the workbin picking up and placing apparatus 40 of the workbin transporting device 1 can clamp and pick up workbins of different sizes, thus expanding the scope of application of the workbin transporting device 1.

It should be noted that, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or device. Without further limitation, elements defined by the phrase "comprising one..." do not preclude the presence of additional identical elements in a process, method, article or device that includes the mentioned elements.

The various embodiments in this specification are described in a related manner. Each embodiment focuses on the differences from other embodiments, and the same and similar parts between the various embodiments can be referred to each other.

The above descriptions are only preferred embodiments of the present application, and are not intended to limit the present application. Any modifications, equivalent replacements, improvements and the like made within the spirit and principles of the present application shall be included within the scope of protection of the present application.

## Claims

1. A workbin picking up and placing system, comprising: a workbin transporting device (1) and a control platform (70); wherein the workbin transporting device (1) comprises a controller (80), a travelling chassis (10), a workbin temporary storage mechanism (30) and a workbin picking up and placing apparatus (40); the controller (80) of the workbin transporting device (1) is communicatively connected with the control platform (70); the workbin picking up and placing apparatus (40) comprises a bearing part (41), a telescopic fork assembly (42) and a shift fork pair assembly (43); the telescopic fork assembly (42) is provided at both sides of the bearing part (41); the shift fork pair assembly (43) is provided on an outer fork plate of the telescopic fork assembly (42) and comprises a rear shift fork pair (431), a middle shift fork pair (432) and a front shift fork pair (433) which are sequentially provided, and at least the middle shift fork pair (432) and the front shift fork pair are movably connected with the outer fork plate; the controller (80) is electrically connected with the travelling chassis (10), the telescopic fork assembly (42) and the shift fork pair assembly (43);
the controller (80) is configured for receiving a picking up instruction or a placing instruction sent by the control platform (70), and controlling the traveling chassis (10) to move based on the picking up instruction or the placing instruction, to enable the workbin transporting device (1) to move to a picking up target shelf or a placing target shelf; determining a target moving out position to which the outer fork plate moves out in a direction of the shelf or in a direction of the workbin temporary storage mechanism (30) and determining at least two target shift fork pairs among the three shift fork pairs, based on a size information of a target workbin and a position information and an angle information of the target workbin on the picking up shelf or the placing target shelf; controlling, after the outer fork plate is moved out to the target moving out position, the target shift fork pairs to rotate, to enable the telescopic fork assembly (42) to clamp and pick up the target workbin; moving the target workbin from the picking up target shelf to the bearing part (41) of the workbin picking up and placing apparatus (40) and moving the target workbin to the workbin temporary storage mechanism (30), or moving the target workbin from the workbin temporary storage mechanism (30) to the bearing part (41) of the workbin picking up and placing apparatus (40) and moving the target workbin to the target placing shelf.

2. The workbin picking up and placing system according to claim 1, wherein the workbin transporting device (1) further comprises a gantry (20);
the workbin temporary storage mechanism (30) is provided at a first side of the gantry (20);
the workbin picking up and placing device (40) is provided at a second side of the gantry (20);
the rear shift fork pair (431), the middle shift fork pair (432) and the front shift fork pair (433) are sequentially provided along a first direction (L) away from the gantry (20).

3. The workbin picking up and placing system according to claim 1, wherein the telescopic fork assembly (42) comprises telescopic forks (421) which are provided oppositely on both sides of the bearing part (41) and transmission mechanisms which are provided oppositely on both sides of the bearing part (41), and each of the telescopic forks (421) comprises an inner fixed plate (4211) connected with the gantry (20) and at least one-stage fork plate slidably connected with the inner fixed plate (4211), and the transmission mechanisms are configured for driving the at least one-stage fork plate to perform a reciprocating telescopic movement; wherein a fork plate which can be telescoped farthest from the gantry (20) is the outer fork plate;
the controller (80) controls the fork plate of the telescopic fork (421) to telescope in two directions along the horizontal direction through the transmission mechanisms, to perform the reciprocating telescopic movement.

4. The workbin picking up and placing system according to claim 1, wherein,
a plurality of through holes are provided on the outer fork plate, at least the middle shift fork pair (432) is accommodated in the through holes, and the controller (80) controls the shift fork pair to move out from one of the through holes; a clamping distance between the rear shift fork pair (431) and the front shift fork pair (433), between the rear shift fork pair (431) and the middle shift fork pair (432), or between the middle shift fork pair (432) and the front shift fork pair (433) is changed by changing a position of the through hole where the shift fork pair is located when moving out.

5. The workbin picking up and placing system according to claim 4, wherein,
at least one of the rear shift fork pair (431), the middle shift fork pair (432) and the front shift fork pair (433) is movably connected with the outer fork plate through an electric telescopic rod;
the controller (80) is further electrically connected with the electric telescopic rod to control telescoping of the electric telescopic rod, to change the clamping distance between the rear shift fork pair (431) and the middle shift fork pair (432), between the rear shift fork pair (431) and the front shift fork pair (433) or between the middle shift fork pair (432) and the front shift fork pair (432) is changed.

6. The workbin picking up and placing system according to claim 1, wherein for at least two shift fork pairs among the shift fork pairs, at least two groups of each of the least two shift fork pairs are provided at intervals along a height direction (H) of the outer fork plate;
the controller (80) separately controls each group of the two shift fork pairs.

7. The workbin picking up and placing system according to claim 1, wherein a front end of the workbin picking up and placing apparatus (40) is also provided with a code reading camera;
the controller (80) obtains the size information of the target workbin and positioning information of the picking up target shelf or the placing target shelf from the picking up instruction or the placing instruction; and obtains the position information and the angle information of the target workbin on the picking up shelf or the placing target shelf by the code reading camera scanning an information code of the picking up target shelf or the placing target shelf.

8. The workbin picking up and placing system according to claim 1, wherein the bearing part (41) is one of an unpowered guide plate, a powered belt assembly or a roller assembly.

9. The workbin picking up and placing system according to claim 8, wherein the bearing part (41) is the powered belt assembly or the roller assembly, and the controller (80) is further electrically connected with a power assembly of the belt assembly or the roller assembly to control the belt assembly or the roller assembly to drive the target workbin thereon to move.

10. A workbin picking up and placing method, which is applied to the controller (80) of the workbin picking up and placing system according to any one of claims 1-9, comprising:
receiving the picking up instruction or the placing instruction sent by the control platform (70);
controlling the traveling chassis (10) to move based on the picking up instruction or the placing instruction, to enable the workbin transporting device (1) to move to the picking up target shelf or the placing target shelf;
based on the size information of the target workbin and the position information and the angle information of the target workbin on the picking up shelf or the placing target shelf, determining the target moving out position to which the outer fork plate moves out in the direction of the shelf or in the direction of the workbin temporary storage mechanism (30) and determining the at least two target shift fork pairs among the three shift fork pairs;
after the outer fork plate is moved out to the target moving out position, controlling the target shift fork pairs to rotate, to enable the telescopic fork assembly (42) to clamp and pick up the target workbin;
moving the target workbin from the picking up target shelf to the bearing part (41) of the workbin picking up and placing apparatus (40) and moving the target workbin to the workbin temporary storage mechanism (30); or moving the target workbin from the workbin temporary storage mechanism (30) to the bearing part (41) of the workbin picking up and placing apparatus (40) and moving the target workbin to the target placing shelf.

11. The workbin picking up and placing method according to claim 10, wherein,
at least one of the rear shift fork pair (431), the middle shift fork pair (432) and the front shift fork pair (433) is movably connected with the outer fork plate through an electric telescopic rod; the controller (80) is further electrically connected with the electric telescopic rod;
before controlling, after the outer fork plate is moved out to the target moving out position, the target shift fork pairs to rotate to enable the telescopic fork assembly (42) to clamp and pick up the target workbin, the method further comprises:
controlling the electric telescopic rod based on the size information of the target workbin, so that the clamping distance between the rear shift fork pair (431) and the front shift fork pair (433), between the rear shift fork pair (431) and the front shift fork pair (433) or between the middle shift fork pair (432) and the front shift fork pair (433) matches with a size of the target workbin.

12. The workbin picking up and placing method according to claim 10, wherein,
if the target workbin is two workbins horizontally placed on the picking up target shelf or the workbin temporary storage mechanism (30) in a front-rear direction, the target shift fork pairs comprise the rear shift fork pair (431), the middle shift fork pair (432) and the front shift fork pair (433); wherein controlling, after the outer fork plate is moved out to the target moving out position, the target shift fork pairs to rotate to enable the telescopic fork assembly (42) to clamp and pick up the target workbin comprises: after the outer fork plate is moved out to the target moving out position, locating the middle shift fork pair between the two workbins, and controlling each target shift fork pair to rotate to enable the telescopic fork assembly (42) to clamp and pick up the target workbin;
if the target workbin is a workbin with a first size matching with a size of the bearing part (41), the target shift fork pairs comprise the rear shift fork pair (431) and the front shift fork pair (433); controlling, after the outer fork plate is moved out to the target moving out position, the target shift fork pairs to rotate to enable the telescopic fork assembly (42) to clamp and pick up the target workbin comprises: after the outer fork plate is moved out to the target moving out position, controlling each target shift fork pair to rotate, to enable the telescopic fork assembly (42) to clamp and pick up the target workbin;
if the target workbin is a workbin with a second size smaller than the size of the bearing part (41), it is determined, based on a target position of the target workbin on the workbin temporary storage mechanism (30), that the target shift fork pairs comprise the rear shift fork pair (431) and the middle shift fork pair (432), or comprise the middle shift fork pair (432) and the front shift fork pair (432); controlling the target shift fork pairs to rotate after the outer fork plate is moved out to the target moving out position, to enable the telescopic fork assembly (42) to clamp and pick up the target workbin comprises: after the outer fork plate is moved out to the target moving out position, controlling each target shift fork pair to rotate, to enable the telescopic fork assembly (42) to clamp and pick up the target workbin.

13. The workbin picking up and placing method according to claim 10, wherein,
for at least two shift fork pairs among the shift fork pairs, at least two groups of each of the at least two shift fork pairs are provided at intervals along the height direction (H) of the outer fork plate;
if at least two groups of the front shift fork pair (433) and at least two groups of the rear shift fork pair (431) are provided at intervals along the height direction (H) of the outer fork plate, two workbins placed up and down on the picking up target shelf can be clamped, and the workbins are workbins with a first size matching with a size of the bearing part (41);
if at least two groups of the front shift fork pair (433) and at least two groups of the middle shift fork pair (432) are provided or at least two groups of the rear shift fork pair (431) and at least two groups of the middle shift fork pair (432) are provided at intervals along the height direction (H) of the outer fork plate, two workbins placed up and down on the picking up target shelf can be clamped, and the workbins are workbins with a second size smaller than a size of the bearing part (41).

14. The workbin picking up and placing method according to claim 10, wherein an front end of the workbin picking up and placing apparatus (40) is further provided with a code reading camera;
the controller (80) obtains the size information of the target workbin and positioning information of the picking up target shelf or the placing target shelf from the picking up instruction or the placing instruction; and obtains the position information and the angle information of the target workbin on the picking up shelf or the placing target shelf by the code reading camera scanning an information code of the picking up target shelf or the placing target shelf.

15. The workbin picking up and placing method according to claim 10, wherein the bearing part (41) is a powered belt assembly or a roller assembly, and the controller (80) is further electrically connected with a power assembly of the belt assembly or the roller assembly to control the belt assembly or the roller assembly to drive the target workbin thereon to move.

16. A workbin transporting device, comprising:
a travelling chassis (10);
a gantry (20) provided on the travelling chassis (10), and a workbin temporary storage mechanism (30) provided on a first side of the gantry (20);
a workbin picking up and placing apparatus (40) provided on a second side of the gantry (20), wherein the workbin picking up and placing apparatus (40) is configured for clamping a workbin from outside and placing the workbin into the workbin temporary storage mechanism (30) or placing the workbin in the workbin temporary storage mechanism (30) on the outside;
the workbin picking up and placing apparatus (40) comprises a bearing part (41), a telescopic fork assembly (42) and a shift fork pair assembly (43); wherein,
the bearing part (41) is connected with the gantry (20) for bearing a workbin;
the telescopic fork assembly (42) comprises telescopic forks (421) which are provided oppositely on both sides of the bearing part (41) and transmission mechanisms which are provided oppositely on both sides of the bearing part (41), wherein each of the telescopic fork (421) comprises an inner fixed plate (4211) connected with the gantry (20) and at least one-stage fork plate slidably connected with the inner fixed plate (4211), and the transmission mechanisms are configured for driving the at least one-stage fork plate to perform a reciprocating telescopic movement;
the shift fork pair assembly (43) is provided on an outer fork plate farthest from the inner fixed plate (4211) when the telescopic fork (421) is moved out, and the shift fork pair assembly (43) at least comprises a rear shift fork pair (431), a middle shift fork pair (432) and a front shift fork pair (433) which are sequentially provided on the outer fork plate along a first direction (L) away from the gantry (20); at least the middle shift fork pair (432) and the front shift fork pair (433) are movably connected with the outer fork plate, and the middle shift fork pair (432) and the front shift fork pair (433) can switch between a first position parallel to the outer fork plate and a second position perpendicular to the outer fork plate.

17. The workbin transporting device according to claim 16, wherein a plurality of temporary storage mechanisms (30) are provided at intervals along a height direction (H) of the gantry (20) assembly;
the workbin transporting device further comprises a lifting and descending assembly (60) which is slidably connected with the gantry (20), and the inner fixed plate (4211) and the bearing part (41) are connected with the gantry (20) through the lifting and descending assembly (60), to enable the lifting and descending assembly (60) to drive the workbin picking up and placing apparatus (40) to move along the height direction (H) of the gantry (20), so as to adapt to heights of the temporary storage mechanisms (30) at different heights.

18. The workbin transporting device according to claim 16, wherein,
a plurality of through holes are provided on the outer fork plate, and at least the middle shift fork pair (432) is accommodated in the through holes, wherein each of the through hole corresponds to an installation position; the installation position of one or two of the rear shift fork pair (431), the middle shift fork pair (432) and the front shift fork pair (433) are changed to change a clamping distance between the rear shift fork pair (431) and the front shift fork pair (433), between the rear shift fork pair (431) and the middle shift fork pair (432), or between the middle shift fork pair (432) and the front shift fork pair (433).

19. The workbin transporting device according to claim 18, wherein the front shift fork pair (433) is located at an end of the outer fork plate on a side away from the gantry (20), the rear shift fork pair (431) is located at an end of the outer fork plate on a side close to the gantry (20), and the through holes are configured to accommodate the middle shift fork pair (432); the installation position of the middle shift fork pair (432) is changed to change the clamping distance between the rear shift fork pair (431) and the middle shift fork pair (432), and between the middle shift fork pair (432) and the front shift fork pair (433).

20. The workbin transporting device according to claim 19, wherein at least one of the rear shift fork pair (431), the middle shift fork pair (432) and the front shift fork pair (433) is movably connected with the outer fork plate through a telescopic rod to change the clamping distance between the rear shift fork pair (431) and the front shift fork pair (433), between the rear shift fork pair (431) and the middle shift fork pair (432), or between the middle shift fork pair (432) and the front shift fork pair (433).

21. The workbin transporting device according to claim 16, wherein for at least two shift fork pairs among the shift fork pairs, at least two groups of each of the at least two shift fork pairs are provided at intervals along a height direction (H) of the outer fork plate.

22. The workbin transporting device according to claim 16, wherein the rear shift fork pair (431) is movably or fixedly connected with the outer fork plate.

23. The workbin transporting device according to any one of claims 16-22, wherein,
the workbin transporting device further comprises a controller, wherein the controller is electrically connected with the travelling chassis (10), the transmission mechanisms (422) of the telescopic fork assembly (42) and the shift fork pair assembly (43).

24. The workbin transporting device according to any one of claims 16-22, wherein the transmission mechanisms can telescope in two directions along a horizontal direction, to enable the outer fork plate to pick up and place the workbin on both sides of the gantry (20).

25. The workbin transporting device according to any one of claims 16-22, wherein a bottom of the bearing part (41) is provided with a rotate supporting assembly (44), and the bearing part (41) is rotatably mounted to the lifting and descending assembly (60) through the rotate supporting assembly (44).

26. The workbin transporting device according to any one of claims 16-22, wherein the temporary storage mechanism has a tray structure;
the workbin picking up and placing apparatus (40) further comprises a pair of support columns (50) provided on the travelling chassis (10) and spaced from the gantry (20), and the temporary storage mechanism is fixed on the gantry (20) and the support columns (50) and extends in a direction away from the support columns (50).

27. The workbin transporting device according to any one of claims 16-22, wherein the bearing part (41) is one of an unpowered guide plate, a powered belt assembly or a roller assembly.

28. A workbin picking up and placing apparatus which is applied to the workbin transporting device (1) according to any one of claims 16-27, wherein,
the workbin picking up and placing apparatus (40) comprises the bearing part (41), the telescopic fork assembly (42) and the shift fork pair assembly (43); wherein,
the bearing part (41) is connected with the gantry (20) for bearing a workbin;
the telescopic fork assembly (42) comprises telescopic forks (421) which are provided oppositely on both sides of the bearing part (41) and transmission mechanisms which are provided oppositely on both sides of the bearing part (41), wherein each of the telescopic forks (421) comprises the inner fixed plate (4211) connected with the gantry (20) and the at least one-stage fork plate slidably connected with the inner fixed plate (4211), and the transmission mechanisms are configured for driving the at least one-stage fork plate to perform the reciprocating telescopic movement; the shift fork pair assembly (43) is provided on a one-stage outer fork plate away from the inner fixed plate (4211) when the telescopic fork (421) is moved out, and the shift fork pair assembly (43) at least comprises the rear shift fork pair (431), the middle shift fork pair (432) and the front shift fork pair (433) which are sequentially provided on the outer fork plate along the first direction (L) away from the gantry (20); at least the middle shift fork pair (432) and the front shift fork pair (433) are movably connected with the outer fork plate, to enable the middle shift fork pair (432) and the front shift fork pair (433) to switch between the first position parallel to the outer fork plate and the second position perpendicular to the outer fork plate.
